# FASCICULE DE BREVET EUROPEEN

(11) **EP 1 979 420 B1**
(45) Date de publication et mention de la délivrance du brevet: **26.06.2013**
(21) Numéro de dépôt: 07700475.2
(22) Date de dépôt: 09.01.2007
(51) Int. Cl.: C09C 1/02, C09C 3/04, C08K 3/26, B01F 3/12, D21H 17/67, D21H 19/38, D21H 17/69

(54) **PROCEDE DE FABRICATION DE PARTICULES A BASE DE CARBONATE DE CALCIUM NATUREL ET DE SELS D'ACIDE ACRYLIQUE-ETHYLENE, SUSPENSIONS ET PIGMENTS SECS OBTENUS, LEURS UTILISATIONS**
VERFAHREN ZUR HERSTELLUNG VON PARTIKELN AUF BASIS VON NATÜRLICHEM CALCIUMCARBONAT UND SALZEN VON ACRYLSÄURE-ETHYLEN, SO ERHALTENE SUSPENSIONEN UND TROCKENPIGMENTE UND DEREN VERWENDUNGEN
PROCESS FOR MANUFACTURING PARTICLES BASED ON NATURAL CALCIUM CARBONATE AND SALTS OF ACRYLIC ACID-ETHYLENE, SUSPENSIONS AND DRY PIGMENTS OBTAINED, AND USES THEREOF

(30) Priorité: 19.01.2006 FR 0600491
(43) Date de publication de la demande: 15.10.2008
(73) Titulaire: OMYA DEVELOPMENT AG, 4665 Oftringen (CH)
(72) Inventeur: BURI, Matthias, CH-4852 Rothrist (CH); GANE, Patrick, CH-4852 Rothrist (CH); HUNZIKER, Philipp, CH-3007 Bern (CH); BURKHALTER, Rene, CH-3360 Herzogenbuchsee (CH); KARTH, Beat, CH-3363 Oberoenz (CH)
(74) Mandataire: Richebourg, Michel François
(86) Numéro de dépôt international: PCT/IB2007/000076
(87) Numéro de publication internationale: WO 2007/083208

(56) Documents cités:
- WO-A2-97/13815
- WO-A2-2006/008657
- US-A1- 2004 077 762

## Description

Un premier objet de la présente invention consiste en un procédé de préparation d'au moins une matière minérale et / ou d'au moins un pigment, comprenant un carbonate de calcium naturel et / ou précipité, préférentiellement naturel, rendu à la fois partiellement organophile et partiellement hydrophile, et comprenant les étapes de :
a) fournir au moins une matière minérale et / ou au moins un pigment contenant du carbonate de calcium naturel et / ou précipité, sous forme sèche ou sous forme d'une dispersion et / ou d'une suspension aqueuse,
b) éventuellement broyer à sec et / ou en milieu aqueux la matière minérale et / ou le pigment résultant de l'étape a),
c) traiter la matière minérale et / ou le pigment résultant de l'étape a) et / ou de l'étape b),
d) éventuellement sécher la matière minérale et / ou le pigment résultant de l'étape a) et / ou b) et / ou c),
caractérisé en ce que :
- l'étape c) de traitement correspond à une étape de mélange en milieu aqueux et / ou de broyage en milieu aqueux, et / ou de concentration en milieu aqueux, de la matière minérale et / ou du pigment issu de l'étape a) et / ou de l'étape b), en présence d'au moins un sel de l'acide éthylène acrylique,
- un agent dispersant et / ou d'aide au broyage est introduit avant et / ou pendant l'étape de traitement c).

Un deuxième objet de la présente invention réside dans les suspensions et les dispersions aqueuses obtenues par ledit procédé.

Un troisième objet de la présente invention réside dans les produits secs obtenus par ledit procédé.

Un quatrième objet de la présente invention réside dans l'utilisation desdites suspensions et dispersions aqueuses et desdits produits secs dans la fabrication des plastiques, des peintures et des papiers, et notamment dans le couchage plastique ou papetier, ainsi que dans la charge de masse plastique ou papetière.

Le procédé a essentiellement pour but le traitement et / ou la production économique d'une matière minérale et / ou d'un pigment comprenant un carbonate de calcium naturel et / ou précipité.

Notamment, le procédé de l'invention permet à l'homme du métier d'obtenir une dispersion de matière minérale et / ou de pigment ainsi traité avec un extrait sec élevé (expression qui sera reprise tout au long de la présente Demande, et définie comme le pourcentage en poids sec de matière minérale et / ou de pigment par rapport au poids total de ladite dispersion).

Un extrait sec élevé, et notamment supérieur à 65 %, préférentiellement 70 %, très préférentiellement supérieur à 75 % du poids total de ladite dispersion conduit à une diminution des coûts de transport d'une telle dispersion, et à une diminution des coûts de séchage d'une telle dispersion.

Le procédé selon l'invention permet d'obtenir notamment de tels extraits secs, tout en conservant à ladite dispersion des propriétés rhéologiques avantageuses, ladite dispersion restant aisément manipulable, et qui évite la présence significative d'agglomérats.

Un deuxième but est de fournir à l'homme du métier la possibilité de traiter la matière minérale et / ou le pigment contenant un carbonate de calcium naturel et / ou précipité pour le rendre à la fois partiellement organophile et partiellement hydrophile, aussi bien pendant une étape de broyage, que pendant une étape de mélange, que pendant une étape de concentration, qui sont les étapes classiquement mises en oeuvre au cours du procédé global de fabrication d'une dispersion aqueuse de matière minérale : ces différentes possibilités constituent autant de souplesse offerte à l'homme du métier.

Un carbonate de calcium rendu ainsi organophile pourra être utilisé avantageusement dans le domaine des matières plastiques ; d'autre part, son caractère hydrophile permettra de le disperser à haute concentration dans l'eau, c'est-à-dire d'obtenir des dispersions ou des suspensions aqueuses de carbonate de calcium dont la teneur en poids sec de matières minérales sera notamment supérieure à 65 % de leur poids total et ce, tout en ayant des propriétés rhéologiques avantageuses et sans la formation d'agglomérats.

Dans les matériaux plastiques, tels que notamment les résines thermoplastiques ou les résines thermodurcissables, on incorpore couramment des matières minérales et / ou des pigments comme par exemple, le carbonate de calcium naturel ou précipité, les dolomies, l'hydroxyde de magnésium, le kaolin, le talc, le gypse, ou encore l'oxyde de titane. Ces matières minérales et/ou pigments, peuvent améliorer des propriétés particulières de ces matériaux plastiques, comme dans le cas de l'utilisation du carbonate de calcium dans le P.V.C. l'augmentation de la rigidité, l'amélioration des échanges thermiques au cours de l'extrusion, ou encore la réduction du dépôt en sortie de filière. La Demanderesse peut à ce titre citer le document "The use of calcium carbonate to enhance the physical properties of rigid vinyl products" (Society of Plastic Engineers, Conf., 12-14 octobre 1999). Par ailleurs, il est également courant de remplacer une partie des résines plastiques, matériaux onéreux, par ces pigments et / ou matières minérales.

Dans le cadre de l'utilisation du carbonate de calcium dans les matériaux plastiques, l'homme du métier -fabricant de matières minérales notamment en vue de leur utilisation dans des matériaux plastiques sait que pour améliorer la compatibilité dudit carbonate avec la matière plastique dans laquelle il est incorporé, il est nécessaire de traiter le carbonate de calcium. A ce titre, il est connu depuis de nombreuses années d'utiliser des dérivés d'acides gras comme agent de traitement du carbonate de calcium, ces acides gras comportant notamment de 10 à 20 atomes de carbone, et plus particulièrement de 16 à 18 atomes de carbone dans une structure à carbone saturé (tel que l'acide stéarique), l'acide palmitique et / ou stéarique et leurs sels étant le ou les agents préférentiellement utilisés par l'homme du métier.

Il est important d'indiquer que le carbonate de calcium est préparé selon diverses étapes de fabrication en milieu aqueux, telles que des étapes de dispersion, de broyage ou encore de concentration. Le produit résultant de ces étapes est une dispersion ou une suspension aqueuse de carbonate de calcium, contenant éventuellement différents agents dispersants et / ou d'aide au broyage et / ou de traitement introduits au cours de ces diverses étapes.

De manière générale, lors de l'ajout de l'acide stéarique (soit à l'état fondu, soit sous forme d'émulsion) dans une dispersion ou une suspension de carbonate de calcium, ou au carbonate de calcium sec, une étape supplémentaire de désagrégation doit être effectuée suite à cet ajout.

Dans le cas de l'utilisation d'une émulsion d'acide stéarique, où un émulsifiant peut être introduit afin de stabiliser cette émulsion, la présence de l'émulsifiant peut provoquer la déstabilisation de la dispersion ou de la suspension de carbonate de calcium, ce qui se traduit par la formation de particules floculées et / ou de particules surnageant. Cet émulsifiant a le désavantage supplémentaire d'induire la création de mousse dans la dispersion ou la suspension.

Ceci fait apparaître un premier inconvénient lié à l'utilisation d'acide stéarique : il nécessite l'ajout d'étapes et / ou d'additifs supplémentaires, parfois avec des conséquences négatives lors du procédé de traitement.

La sélection de traitement effectué avec des sels d'acide stéarique, tel que neutralisé avec les ions calcium, ne mène pas non plus à la solution recherchée par l'homme du métier : il présente lui aussi le désavantage d'induire la création de mousse dans la dispersion ou suspension de carbonate de calcium.

Enfin, il apparaît que la mise en oeuvre d'acide stéarique ou de ses sels ne permet pas d'obtenir des suspensions ou des dispersions aqueuses de carbonate de calcium ayant une concentration en poids de matière minérale sèche supérieure à 65 % du poids total de ladite dispersion ou suspension avec une viscosité exploitable et / ou sans la création d'agglomérats qui conduisent à la présence de résidus récupérés sur les tamis de filtration. Or, le carbonate de calcium est communément fabriqué selon les étapes précédemment décrites, transporté sous forme de dispersion ou de suspension aqueuse, éventuellement stocké sous cette même forme, et enfin séché avant d'être incorporé dans le matériau plastique. Dans un souci économique, il est indispensable pour l'homme du métier de fabriquer et de livrer au transformateur final une dispersion ou une suspension aqueuse de carbonate de calcium ayant un extrait sec le plus élevé possible, en maintenant une viscosité satisfaisante et / ou sans la création significative d'agglomérats et donc de résidus récupérés sur tamis, ce que ne permet pas l'emploi d'acide stéarique ou de ses sels.

Visant à résoudre ces différents inconvénients liés à l'emploi de l'acide stéarique ou de ses sels, afin de traiter pour la rendre à la fois partiellement organophile et partiellement hydrophile une matière minérale (et notamment le carbonate de calcium) en vue de son incorporation dans les matériaux plastiques et en vue de la fabriquer de manière économique, la Demanderesse a mis au point un nouveau procédé de préparation d'au moins une matière minérale et / ou d'au moins un pigment comprenant du carbonate de calcium naturel et / ou précipité à la fois partiellement organophile et partiellement hydrophile, et comprenant les étapes de :
a) fournir au moins une matière minérale et / ou un pigment contenant du carbonate de calcium naturel et / ou précipité, sous forme sèche ou sous forme d'une dispersion et / ou d'une suspension aqueuse,
b) éventuellement broyer à sec et / ou en milieu aqueux la matière minérale et / ou le pigment résultant de l'étape a),
c) traiter la matière minérale et / ou le pigment résultant de l'étape a) et / ou de l'étape b),
d) éventuellement sécher la matière minérale et / ou le pigment résultant de l'étape a) et / ou b) et / ou c),
caractérisé en ce que :
- l'étape c) de traitement correspond à une étape de mélange en milieu aqueux et / ou de broyage en milieu aqueux, et / ou de concentration en milieu aqueux, de la matière minérale et / ou du pigment issu de l'étape a) et / ou de l'étape b), en présence d'au moins un sel de l'acide éthylène acrylique,
- un agent dispersant et / ou d'aide au broyage est introduit avant et / ou pendant l'étape de traitement c).

Un tel procédé permet donc de manière tout à fait surprenante d'incorporer l'agent de traitement afin de fabriquer des suspensions de carbonate de calcium naturel et / ou précipité à des extraits secs supérieurs à ceux obtenus par les procédés de l'art antérieur mettant en oeuvre l'acide stéarique ou ses sels, tout en maintenant une viscosité satisfaisante et / ou sans la création significatif d'agglomérats et donc de résidus récupérés sur tamis, et sans les inconvénients de cet art antérieur.

Il est notamment tout à fait surprenant que, dans la mesure ou les sels d'acide éthylène acrylique sont ajoutés pendant ou après l'ajout de dispersant, ses sels n'influencent pas de manière négative les propriétés rhéologiques des dispersions obtenues : en effet, on parvient de manière surprenante, selon le procédé de l'invention, à obtenir des extraits secs élevés (et notamment supérieurs à 65 %) avec de bonnes propriétés rhéologiques et sans formation d'agglomérats.

Parallèlement, il est tout à fait surprenant que le dispersant (qui est ajouté avant ou pendant l'introduction des sels d'acide éthylène acrylique), n'empêche pas l'interaction entre lesdits sels et la surface du carbonate de calcium afin de le rendre organophile : en effet, on parvient de manière surprenante, selon le procédé selon l'invention, à fabriquer des particules de carbonate de calcium dispersables dans des matières plastiques.

La Demanderesse tient à indiquer qu'il existe un certain nombre de documents relatant l'utilisation d'acide éthylène acrylique dans un procédé de fabrication du carbonate de calcium. A ce sujet, elle tient à souligner :
- tout d'abord, qu'aucun de ces documents ne vise à résoudre le même problème technique que celui de la présente Demande,
- d'autre part, qu'aucun de ces documents ne révèle la solution technique de la présente Demande qui consiste en le procédé décrit ci-dessus,
- de plus, que rien ne suggérait dans un de ces documents, ou dans les combinaisons possibles d'un ou de plusieurs de ces documents entre eux ou avec d'autres documents, le procédé selon l'invention ; et qu'au contraire, l'enseignement de ces documents ne pouvait pas conduire l'homme du métier au procédé objet de la présente invention.

Ces arguments vont désormais être développés au regard du contenu et de l'enseignement révélé par chacun des documents portant sur l'utilisation d'acide éthylène acrylique au cours d'un procédé de fabrication de carbonate de calcium.

L'homme du métier connaît le document US 6 808 809 qui vise à résoudre le problème technique de fabriquer une charge minérale ayant notamment une bonne coulabilité ; à ce titre, ce document ne résout pas du tout le même problème technique que celui objet de la présente Demande. La solution qu'il propose consiste à introduire dans un sécheur une suspension aqueuse de charge minérale (tel que le carbonate de calcium) ayant un diamètre moyen inférieur à 15 µm, et une dispersion aqueuse de polymère (tel que notamment l'acide éthylène acrylique). Ce document indique que la suspension de charge minérale peut avoir un extrait sec compris entre 10 % et 90 % du poids total de ladite suspension ; toutefois, seul l'exemple 1 réalisé dans le cas du trihydroxyde d'aluminium révèle une valeur d'extrait sec, qui n'est égale qu'à 55 %. Rien n'est d'ailleurs indiqué sur la viscosité des suspensions obtenues, ni sur la possibilité de réduire la quantité d'agglomérats de matières minérales. La Demanderesse souligne qu'en aucun cas ce document ne révèle l'utilisation d'acide éthylène acrylique sous forme de sels, ce qui constitue donc un élément de distinction avec la présente invention. Enfin, rien ne suggère à l'homme du métier d'accorder une importance particulière à l'emploi d'un agent dispersant dans ce document, et a fortiori à l'emploi d'un agent dispersant avant l'utilisation d'acide éthylène acrylique sous forme de sels ; de même, rien ne suggère dans ce document -centré sur un procédé de séchage- un procédé selon l'invention qui offre la possibilité de traiter un carbonate de calcium aussi bien pendant une étape de broyage, que de mélange ou de concentration et ce, en présence d'au moins un sel de l'acide éthylène acrylique, et d'un agent dispersant ou d'aide au broyage utilisé avant l'étape de traitement du carbonate de calcium.

L'homme du métier connaît aussi le document WO 93 / 11183 qui vise à résoudre le problème technique d'améliorer la dispersion de particules inorganiques dans différents matériaux, tels que les peintures, les adhésifs, les mastiques, ou encore les liants pour matériaux non-tissés ; il s'agit donc d'un problème technique différent de celui résolu par la présente Demande, puisqu'il n'aborde pas notamment la question de fabriquer des suspensions de matières minérales ayant un extrait sec élevé. La solution décrite consiste en un procédé de préparation d'une dispersion aqueuse stable, par mélange d'une suspension aqueuse de particules inorganiques (tel que le carbonate de calcium) et d'une suspension aqueuse de particules polymériques de latex, après avoir ajusté leurs potentiels zêta. L'acide éthylène acrylique est décrit comme un des polymères qui peuvent être utilisés, sans qu'il ne soit jamais exemplifié ni sans qu'il ne soit jamais particulièrement distingué parmi tous les polymères utilisables. D'autre part, les exemples démontrent que les suspensions résultantes possèdent des extraits secs peu élevés, et toujours inférieurs à 60 % en poids sec de particules minérales par rapport au poids total desdites suspensions. Un élément de distinction fondamental avec la présente invention est que ce document ne mentionne jamais la présence de sels de l'acide éthylène acrylique. Enfin, rien ne suggère à l'homme du métier d'accorder une importance particulière à l'emploi d'un agent dispersant dans ce document, et a fortiori à l'emploi d'un agent dispersant avant l'utilisation d'acide éthylène acrylique sous forme de sels ; de même, rien ne suggère dans ce document -centré sur un procédé de mélange- un procédé selon l'invention qui offre la possibilité de traiter un carbonate de calcium aussi bien pendant une étape de broyage, que de mélange ou de concentration et ce, en présence d'au moins un sel de l'acide éthylène acrylique, et d'un agent dispersant ou d'aide au broyage utilisé avant l'étape de traitement du carbonate de calcium.

L'homme du métier connaît aussi le document WO 97 / 13815 qui vise à résoudre le problème technique de fabriquer des poudres compatibles avec les matériaux plastiques (mais aussi les peintures, le papier), d'éviter la coalescence des particules qui constituent de telles poudres, de rendre la surface du carbonate de calcium hydrophobe ; à ce titre, ce document ne résout que partiellement le problème objet de la présente Demande. En effet, la solution qu'il propose ne permet pas d'obtenir des suspensions aqueuses de carbonate de calcium avec un extrait sec supérieur à 65 % par rapport au poids total desdites suspensions, comme le démontrent notamment les résultats du tableau 2 de la page 29. De plus, la solution proposée consiste à dissoudre dans un premier temps un polymère (tel que l'acide éthylène acrylique) dans un milieu contenant un acide carboxylique, puis à mettre en contact le produit obtenu avec le carbonate de calcium de manière à le faire précipiter sur ce dernier : cette étape de dissolution constitue un élément de différenciation fondamental avec la présente invention. De plus, cette étape de dissolution, lorsqu'elle met en oeuvre des acides carboxyliques à chaînes longues va conduire aux même problèmes que ceux résultant de l'emploi d'acide stéarique, c'est-à-dire à la nécessité d'une étape supplémentaire de désagglomération et / ou d'ajout d'additifs supplémentaires des particules de carbonate de calcium. Cette même étape de dissolution, lorsqu'elle met en oeuvre des acides carboxyliques à chaînes plus courtes, va conduire à la floculation des particules de carbonate de calcium et ne permettra donc pas d'obtenir des suspensions aqueuses avec un extrait sec élevé et notamment supérieur à 65 % du poids total desdites suspensions. Ces acides carboxyliques à chaînes plus courtes risquent également de détruire les particules de carbonate de calcium, et même de générer du dioxyde de carbone. Enfin, ces acides carboxyliques à chaînes courtes risquent de diminuer la résistivité et d'augmenter la conductivité des matières plastiques dans lesquelles sont finalement utilisés les carbonates de calcium selon l'invention. Enfin, rien ne suggère à l'homme du métier d'accorder une importance particulière à l'emploi d'un agent dispersant dans ce document, et a fortiori à l'emploi d'un agent dispersant avant l'utilisation d'acide éthylène acrylique sous forme de sels ; de même, rien ne suggère dans ce document -centré sur un procédé de mélange- un procédé selon l'invention qui offre la possibilité de traiter un carbonate de calcium aussi bien pendant une étape de broyage, que de mélange ou de concentration et ce, en présence d'au moins un sel de l'acide éthylène acrylique, et d'un agent dispersant ou d'aide au broyage utilisé avant l'étape de traitement du carbonate de calcium.

L'homme du métier connaît aussi le document WO 02 / 96982 qui vise à résoudre le problème technique de fabriquer un matériau nanocomposite organique-inorganique, tout en renforçant à l'intérieur de ce dit matériau la compatibilité entre les particules organiques et les particules inorganiques ; à ce titre, ce document ne résout pas le même problème technique que celui objet de la présente Demande. La solution qu'il propose consiste à former un mélange entre une particule minérale (tel que le carbonate de calcium) et une solution polymère (telle que par exemple à base d'acide éthylène acrylique) en présence de solvants, à évaporer les solvants, et à mélanger le produit obtenu avec une résine polymère. Ce document ne donne aucune indication sur les extraits secs des mélanges de particules minérales et de polymères. D'autre part, il présente l'inconvénient de mettre en oeuvre des solvants (tels que notamment le THF et l'éthanol) dont la présence est indésirable pour l'homme du métier, notamment parce qu'ils vont engendrer un taux de carbone organique volatile (COV) important dans l'atmosphère. Enfin, ce procédé est différent de celui objet de la présente invention, puisqu'il ne mentionne pas la présence d'agent dispersant. Enfin, rien ne suggère dans ce document - centré sur un procédé de mélange- un procédé selon l'invention qui offre la possibilité de traiter un carbonate de calcium aussi bien pendant une étape de broyage, que de mélange ou de concentration et ce, en présence d'au moins un sel de l'acide éthylène acrylique, et d'un agent dispersant ou d'aide au broyage utilisé avant l'étape de traitement du carbonate de calcium.

L'homme du métier connaît aussi le document US 5 449 402 qui vise à résoudre le problème technique de lier de manière irréversible une charge minérale et un modificateur organique, entrant alors dans la composition de revêtements aqueux dont l'opacité et la brillance sont améliorées ; à ce titre, ce document ne résout absolument pas le même problème technique que celui objet de la présente Demande. La solution qu'il propose consiste à fabriquer un pigment à partir de particules de carbonate de calcium en état floculé et d'un agent modificateur anionique (tel que des polymères et notamment l'acide éthylène acrylique), le carbonate de calcium et l'agent modificateur étant alors liés l'un à l'autre par des liaisons électrostatiques. L'enseignement général de ce document est que, afin de traiter un carbonate de calcium notamment avec une solution d'acide éthylène acrylique, il est préférable de disposer au départ d'un pigment sous forme floculée (colonne 4, lignes 39 à 62) et non pas d'un pigment dispersé (tel qu'indiqué explicitement à la ligne 50 de la colonne 4), cet état dispersé étant défini comme résultant de l'addition d'un agent ayant conduit à une diminution de la viscosité ou à la réduction de tailles des particules (colonne 1, lignes 15 à 25). Un agent dispersant tel qu'un polyacrylate de sodium peut par la suite être ajouté après l'introduction de la solution d'acide éthylène acrylique (colonne 4, lignes 63 à 65). Par conséquent, l'homme du métier est fortement incité à ne pas mettre en oeuvre de dispersant avant le traitement du carbonate de calcium par une solution d'acide éthylène acrylique. Cet état dispersé, tel que défini dans le document US 5 449 402 comme résultant de l'addition d'un agent conduisant à une diminution de la viscosité ou à une réduction de la taille des particules, est donc non désiré dans ce document ; or, il fait partie d'une des caractéristiques fondamentales de la présente invention. En effet, la Demanderesse a su remarquer que, de manière surprenante puisque tout à fait contrairement à l'enseignement de l'art antérieur, l'introduction d'un agent dispersant obligatoirement avant ou pendant l'ajout de sels de l'acide éthylène acrylique pour traiter le carbonate de calcium, permet de rendre ainsi le carbonate de calcium à la fois partiellement organophile et partiellement hydrophile, sans utiliser l'acide stéarique, permet d'obtenir des suspensions aqueuses avec un extrait sec élevé et une bonne rhéologie et sans agglomérats, et permet de fournir à l'homme du métier un procédé très souple puisque l'acide éthylène acrylique peut être utilisé aussi bien pendant une étape de broyage, que de mélange, ou de concentration.

Aussi, aucun des documents accessibles à l'homme du métier sur l'utilisation d'acide éthylène acrylique ne concerne le même problème technique que celui résolu par la présente Demande.

De même, aucun d'entre eux ne révèle la solution technique objet de la présente Demande. Enfin, aucun d'entre eux, ni leurs combinaisons entre eux ou avec d'autres documents ne suggère la solution technique objet de la présente Demande.

Un des mérites de la Demanderesse repose notamment sur le fait qu'elle a su remarquer que les choix particuliers suivants :
- l'utilisation de sels d'acide éthylène acrylique pour traiter un carbonate de calcium naturel et / ou précipité,
- l'ajout d'un agent dispersant et / ou d'aide au broyage avant et / ou pendant l'étape de traitement du carbonate de calcium par les sels d'acide éthylène acrylique (ce qui est contraire à l'enseignement de l'état de la technique),
permettent de manière surprenante la mise au point d'un procédé :
- qui évite les inconvénients liés à l'utilisation de l'acide stéarique (étape de désagglomération et d'ajout d'additifs supplémentaires), ce qui représente un gain financier,
- qui permet d'obtenir des suspensions aqueuses de matières minérales à extrait sec élevé (notamment supérieur à 65 %) avec une bonne rhéologie et sans la présence d'agglomérats qui créeraient des résidus sur les tamis de filtration, ce qui représente un intérêt technique et économique,
- qui permet de fournir à l'homme du métier un procédé où il peut traiter le carbonate de calcium aussi bien pendant une étape de broyage, que de mélange ou de concentration en milieu aqueux, ce qui représente une très grande souplesse.

De plus, ce procédé permet d'obtenir un carbonate de calcium naturel et / ou précipité à la fois partiellement organophile et partiellement hydrophile, ce qui est tout à fait surprenant. Il est notamment tout à fait surprenant que, dans la mesure ou les sels d'acide éthylène acrylique sont ajoutés pendant ou après l'ajout de dispersant, ces sels n'influencent pas de manière négative les propriétés rhéologiques des dispersions obtenues : en effet, on parvient de manière surprenante, selon le procédé de l'invention, à obtenir des extraits secs élevés (et notamment supérieurs à 65 %) avec de bonnes propriétés rhéologiques et sans formation d'agglomérats.

Parallèlement, il est tout à fait surprenant que le dispersant (qui est ajouté avant ou pendant l'introduction des sels d'acide éthylène acrylique), n'empêche pas l'interaction entre lesdits sels et la surface du carbonate de calcium afin de le rendre organophile : en effet, on parvient de manière surprenante, selon le procédé selon l'invention, à fabriquer des particules de carbonate de calcium dispersables dans des matières plastiques.

Enfin, la Demanderesse tient à indiquer qu'elle connaît la Demande de brevet française n° 04 07806 déposée mais non encore publiée, et qui n'intervient donc qu'au titre de la nouveauté afin d'évaluer la brevetabilité de la présente Demande.

A ce titre, la Demande de brevet française n° 04 07806 décrit un procédé de préparation de particules pigmentaires auto-liantes, sèches ou en suspension ou dispersion aqueuses, comprenant les étapes suivantes :
a) former une ou plusieurs suspensions aqueuses d'au moins une matière inorganique et la ou les introduire dans un broyeur en vue de l'étape c),
b) former ou prendre une ou plusieurs solutions ou suspensions ou émulsions aqueuses d'au moins un liant et la ou les introduire dans un broyeur en vue de l'étape c),
c) co-broyer la ou les suspensions aqueuses obtenues à l'étape a) avec la ou les solutions ou suspensions ou émulsions aqueuses obtenues à l'étape b) de manière à obtenir une suspension aqueuse de particules pigmentaires auto-liantes,
d) éventuellement co-broyer la suspension aqueuse obtenue à l'étape c) avec une ou plusieurs solutions ou suspensions ou émulsions aqueuses d'au moins un liant,
e) éventuellement sécher la suspension aqueuse obtenue à l'étape c) ou à l'étape d).

Ce procédé, tel qu'indiqué dans la Demande de brevet française n° 04 07806, évite à l'homme du métier d'avoir recours à un troisième constituant durant la préparation des suspensions aqueuses contenant les matières inorganiques et les liants, ainsi que pendant l'étape de co broyage : ceci constitue donc une différence fondamentale avec la présente invention qui a nécessairement recours à un agent dispersant et / ou d'aide au broyage avant ou pendant l'étape de traitement de la matières minérale par l'acide éthylène acrylique.

Aussi, un premier objet de l'invention réside en un procédé de préparation d'au moins une matière minérale et / ou d'au moins un pigment comprenant du carbonate de calcium naturel et / ou précipité, préférentiellement naturel, à la fois partiellement organophile et partiellement hydrophile, et comprenant les étapes de :
a) fournir au moins une matière minérale et / ou un pigment comprenant du carbonate de calcium naturel et / ou précipité, préférentiellement naturel, sous forme sèche ou sous forme d'une dispersion et / ou d'une suspension aqueuse,
b) éventuellement broyer à sec et / ou en milieu aqueux la matière minérale et / ou le pigment résultant de l'étape a),
c) traiter la matière minérale et / ou le pigment résultant de l'étape a) et / ou de l'étape b),
d) éventuellement sécher la matière minérale et / ou le pigment résultant de l'étape a) et / ou b) et 1 ou c),
caractérisé en ce que :
- l'étape c) de traitement correspond à une étape de mélange en milieu aqueux et / ou de broyage en milieu aqueux, et / ou de concentration en milieu aqueux, de la matière minérale et / ou du pigment issu de l'étape a) et / ou de l'étape b), en présence d'au moins un sel de l'acide éthylène acrylique,
- un agent dispersant et / ou d'aide au broyage est introduit avant et / ou pendant l'étape de traitement c).

La Demanderesse rappelle que, selon ce procédé, la matière minérale et / ou le pigment comprenant au moins un carbonate de calcium naturel, lorsqu'il est présent sous forme d'une dispersion ou d'une suspension aqueuse, n'est pas à l'état floculé contrairement à ce que revendique le document US 5 449 402.

Le procédé selon l'invention est aussi caractérisé en ce que le sel d'acide éthylène acrylique est un sel soluble en milieux aqueux.

Le procédé selon l'invention est aussi caractérisé en ce que les groupements carboxyliques du sel d'acide éthylène acrylique sont partiellement ou totalement dissociés de leur proton acide.

Le procédé selon l'invention est aussi caractérisé en ce que, dans le sel d'acide éthylène acrylique, le rapport massique de monomère éthylène à monomère d'acide acrylique est compris entre 10 : 90 et 30 : 70, et est préférentiellement égal à 20 : 80.

Le procédé selon l'invention est aussi caractérisé en ce que le sel d'acide éthylène acrylique présente un indice de fusion compris entre 50 g/10 minutes et 1 500 g/10 minutes, de préférence entre 200 g/10 minutes et 300 g/10 minutes lorsque le sel d'acide éthylène acrylique est totalement neutralisé, et de préférence entre 1 000 g/10 minutes et 1 400 g/10 minutes lorsque le sel d'acide éthylène acrylique est neutralisé de 70 à 99 % (en fraction de sites carboxyliques de l'acide éthylène acrylique), mesuré selon la norme ASTM1238 125°C/2,16kg.

Le procédé selon l'invention est aussi caractérisé en ce que les groupements carboxyliques desdits sels d'acide éthylène acrylique sont entièrement neutralisés ou neutralisés de 70 à 99 % par rapport à la totalité des sites carboxyliques de l'acide éthylène acrylique, avec au moins un agent de neutralisation.

Le procédé selon l'invention est aussi caractérisé en ce que ledit agent de neutralisation comprend au moins un cation monovalent.

Le procédé selon l'invention est aussi caractérisé en ce que ledit cation monovalent comprend un ou plusieurs ion alkali et / ou une ou plusieurs amines et / ou l'ammoniaque.

Le procédé selon l'invention est aussi caractérisé en ce que ledit ion monovalent alkali comprend un ion sodium.

Le procédé selon l'invention est aussi caractérisé en ce que ladite amine comprend une amine primaire.

Le procédé selon l'invention est aussi caractérisé en ce que ladite amine comprend une alcanolamines, comprenant au moins un groupement éthanol et / ou propanol, et en ce que ladite alcanolamines est alors préférentiellement choisi parmi la 2-amino-2-méthyl-1-propanol et / ou la diméthyléthanolamine, et en ce qu'elle est très préférentiellement la 2-amino-2-méthyl-1-propanol.

Le procédé selon l'invention est aussi caractérisé en ce qu'on utilise une quantité de 2-amino-2-méthyl-1-propanol, de manière à apporter une fraction de cation monovalent comprise entre 75 et 125 % des groupement carboxyliques de l'acide éthylène acrylique, et préférentiellement de manière à apporter une fraction de cation monovalent égale à 100 % des groupement carboxyliques de l'acide éthylène acrylique.

Le procédé selon l'invention est aussi caractérisé en ce qu'on utilise une quantité de diméthyl éthanolamine, de manière à apporter une fraction de cation monovalent comprise entre 75 et 125 % des groupement carboxyliques de l'acide éthylène acrylique, et préférentiellement de manière à apporter une fraction de cation monovalent égale à 100 % des groupement carboxyliques de l'acide éthylène acrylique.

Le procédé selon l'invention est aussi caractérisé en ce que ledit acide éthylène acrylique présente une viscosité de 3 000 à 25 000 mPa.s, de 15 000 à 100 000 mPa.s, et de 50 000 à 400 000 mPa.s à des températures respectives de 200°C, 170°C et 140°C.

Dans une variante particulière, le procédé selon l'invention est caractérisé en ce que ledit acide éthylène acrylique présente une viscosité de 3 000 à 7 000 mPa.s, de 15 000 à 20 000 mPa.s, et de 50 000 à 100 000 mPa.s à des températures respectives de 200°C, 170°C et 140°C.

Dans une autre variante particulière, le procédé selon l'invention est caractérisé en ce que ledit acide éthylène acrylique présente une viscosité de 15 000 à 25 000 mPa.s, de 50 000 à 100 000 mPa.s, et de 300 000 à 400 000 mPa.s à des températures respectives de 200°C, 170°C et 140°C.

Le procédé selon l'invention est aussi caractérisé en ce que la matière minérale et / ou le pigment comprend, outre le carbonate de calcium, également au moins une autre matière minérale et / ou pigment choisi parmi les dolomies, les bentonites, le kaolin, le talc, le ciment, le gypse, la chaux, la magnésie, le dioxyde de titane, le blanc satin, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et en ce que cette autre matière minérale est préférentiellement le kaolin.

Le procédé selon l'invention est aussi caractérisé en ce que la quantité en poids sec de carbonate de calcium est supérieure ou égale à 70 % du poids sec total de pigments et / ou de matières minérales.

Le procédé selon l'invention est aussi caractérisé en ce que, au cours de l'étape a) et lorsque la matière minérale et / ou le pigment est présent sous forme d'une dispersion et /ou d'une suspension aqueuse, la concentration en poids sec de pigment et / ou matière minérale est supérieure à 60 %, préférentiellement 65 %, très préférentiellement supérieure à 70 %, de manière la plus préférentielle est comprise entre 74 % et 78 % du poids total de ladite dispersion et / ou suspension ou, en ce que la concentration en poids sec de pigment et / ou matière minérale est inférieure à 30 %, préférentiellement comprise entre 18 et 22 % du poids total de ladite dispersion et / ou suspension, et en ce que ladite dispersion et / ou suspension est une suspension ne contenant pas d'agent dispersant.
La Demanderesse souligne que ces limitations visent l'étape a), et non pas la dispersion et / ou la suspension aqueuse obtenue après l'étape c) dont on cherche à augmenter nécessairement l'extrait sec, ce qui fait partie d'un des volets du problème technique résolu par la présente Demande.

Le procédé selon l'invention est aussi caractérisé en ce que l'étape de broyage b), est réalisée en continu ou en discontinu, préférentiellement en continu.

Le procédé selon l'invention est aussi caractérisé en ce que l'étape de broyage b), s'effectue en présence de billes de broyage à base d'oxyde et / ou de silicate de zirconium, éventuellement stabilisé avec un oxyde de cérium et / ou d'yttrium.

Dans la variante selon laquelle l'étape de broyage b) est un broyage à sec, le procédé selon l'invention est aussi caractérisé en ce que cette étape de broyage à sec conduit à l'obtention de matières minérales et / ou de pigments ayant un diamètre moyen inférieur à 50 µm, préférentiellement inférieur à 15 µm, très préférentiellement inférieur à 5 µm, et de manière encore plus préférentielle en ce que ce diamètre moyen est compris entre 1,3 et 1,7 µm, tel que mesuré à partir d'un appareil Sedigraph™ 5100 commercialisé par la société MICROMERITICS™.

Dans la variante selon laquelle l'étape de broyage b) est un broyage en milieu aqueux, le procédé selon l'invention est aussi caractérisé en ce que cette étape de broyage en milieu aqueux conduit à l'obtention de matières minérales et / ou de pigments présentant une fraction de particules avec un diamètre inférieur à 2 µm supérieure à 60 % (telle que mesurée par un appareil Sedigraph™ 5100 commercialisé par la société MICROMERITICS™), ou une fraction de particules avec un diamètre inférieur à 2 µm supérieure à 90 % (telle que mesurée par un appareil Sedigraph™ 5100 commercialisé par la société MICROMERITICS™), ou une fraction de particules avec un diamètre inférieur à 2 µm supérieure à 99 % (telle que mesurée par un appareil Sedigraph™ 5100 commercialisé par la société MICROMERITICS™).

Le procédé selon l'invention est aussi caractérisé en ce que l'étape c) de traitement conduit à une dispersion et / ou une suspension aqueuse dont le pourcentage en poids sec de matières minérales et / ou de pigments est supérieur à 65 %, préférentiellement supérieur à 70 %, très préférentiellement supérieur à 75 %, et de manière la plus préférentielle entre 75 et 78 % du poids total de ladite dispersion et / ou suspension.

Le procédé selon l'invention est aussi caractérisé en ce que l'étape c) de traitement conduit à une dispersion et / ou une suspension aqueuse dont les matières minérales et / ou les pigments ont un diamètre moyen inférieur à 50 µm, préférentiellement inférieur à 15 µm, très préférentiellement inférieur à 5 µm, et de manière encore plus préférentielle en ce que ce diamètre moyen est compris entre 0,3 et 1,7 µm, et de manière la plus préférentielle est compris entre 0,5 et 0,9 µm, tel que mesuré par un appareil Sedigraph™ 5100 commercialisé par la société MICROMERITICS™.

Le procédé selon l'invention est aussi caractérisé en ce que l'étape c) de traitement conduit à une dispersion et / ou une suspension aqueuse présentant une fraction de particules avec un diamètre inférieur à 2 µm supérieure à 60 % (telle que mesurée par un appareil Sedigraph™ 5100 commercialisé par la société MICROMERITICS™), ou une fraction de particules avec un diamètre inférieur à 2 µm supérieure à 90 % (telle que mesurée par un appareil Sedigraph™ 5100 commercialisé par la société MICROMERITICS™), ou une fraction de particules avec un diamètre inférieur à 2 µm supérieure à 99 % (telle que mesurée par un appareil Sedigraph· 5100 commercialisé par la société MICROMERTTICS™).

Le procédé selon l'invention est aussi caractérisé en ce que l'étape c) de traitement conduit à une dispersion et / ou une suspension aqueuse présentant une viscosité Brookfield™ mesurée à 100 tours / minute (mesurée à 25°C, avec le mobile n° 3, et avec l'appareil DVII+ dans un container de 1 litre) inférieure a 1 000 mPa.s, préférentiellement inférieure à 700 mPa.s, très préférentiellement inférieure à 500 mPa.s, et de manière encore plus préférentielle en ce que cette viscosité est comprise entre 100 et 300 mPa.s.

Le procédé selon l'invention est aussi caractérisé en ce que l'étape c) de traitement conduit à une dispersion et / ou une suspension aqueuse ayant un résidu sur tamis supérieur à 45 µm, de moins de 100 ppm, préférentiellement de moins de 70 ppm, plus préférentiellement de moins de 60 ppm, et de manière la plus préférentielle de moins de 50 ppm.

Le procédé selon l'invention est aussi caractérisé en ce que l'étape c) est préférentiellement une étape de broyage en milieu aqueux.

Le procédé selon l'invention est aussi caractérisé en ce que l'étape d) de séchage est effectuée préférentiellement après l'étape c) de traitement.

Le procédé selon l'invention est aussi caractérisé en ce que le séchage est effectué par un sécheur atomisateur.

Le procédé selon l'invention est aussi caractérisé en ce que l'agent dispersant et / ou d'aide au broyage en milieu aqueux, introduit pendant et ou avant l'étape c) est un homopolymère de l'acide acrylique et / ou un copolymère de l'acide acrylique avec un autre monomère hydrosoluble choisi parmi l'acide méthacrylique, l'acide maléïque, l'acide itaconique, l'acide crotonique, l'acide fumarique, l'acide isocrotonique, aconitique, mésaconique, sinapique, undécylénique, angélique, canellique et/ou l'acide 2-acrylamido 2-méthyl propane sulfonique sous forme acide ou partiellement neutralisée, ou encore parmi l'acrylamide, le méthylacrylamide, les esters des acides acryliques ou méthacryliques tels que, le phosphate d'acrylate ou méthacrylate d'éthylène ou propylène glycol ou bien encore parmi la vinylpyrrolidone, le vinylcaprolactame, l'acétate de vinyle, le styrène sulfonate de sodium, l'allylamine et ses dérivés, et préférentiellement en ce que l'agent dispersant et / ou d'aide au broyage est un choisi parmi les copolymères de l'acide acrylique avec l'acrylamide ou l'acide maléique.

Le procédé selon l'invention est aussi caractérisé en ce que l'agent de broyage à sec utilisé pendant l'étape b) de broyage, lorsque celui-ci est un broyage à sec, est choisi parmi les composés à base de glycol, et préférentiellement parmi l'éthylène glycol, le diéthylène glycol, le monopropylène glycol, et en ce qu'il est préférentiellement un monopropylène glycol de poids moléculaire compris entre 200 et 1 000 g/mole.

Le procédé selon l'invention est aussi caractérisé en ce que la proportion totale d'acide éthylène acrylique est comprise entre 0,1 et 10 %, préférentiellement entre 0,2 et 2 %, et est très préférentiellement égale à 0,5 à 1 % du poids sec de pigments et / ou de matières minérales.

Le procédé selon l'invention est aussi caractérisé en ce que la proportion totale de dispersant et / ou d'agent d'aide au broyage est comprise entre 0,1 et 2 % préférentiellement entre 0,2 et 1,5 %, et est très préférentiellement comprise entre 0,3 et 0,6 % du poids sec de pigments et / ou de matières minérales.

Le procédé selon l'invention est aussi caractérisé en ce que la quantité en poids d'acide éthylène acrylique est environ égale à la quantité en poids d'agent dispersant et / ou d'aide au broyage, lorsque l'acide éthylène acrylique est neutralisé avec le 2-amino-2-méthyl-1-propanol.

Le procédé selon l'invention est aussi caractérisé en ce que la quantité en poids d'acide éthylène acrylique est environ égale à la moitié de la quantité en poids d'agent dispersant et / ou d'aide au broyage, lorsque l'acide éthylène acrylique est neutralisé avec le sodium.

Un autre objet de l'invention réside dans les suspensions et / ou les dispersions aqueuses de pigments et / ou de matières minérales, caractérisées en ce qu'elles sont obtenues par le procédé selon l'invention.

Un autre objet de l'invention réside dans les suspensions et / ou les dispersions aqueuses de pigments et / ou de matières minérales caractérisées en ce qu'elles comprennent du carbonate de calcium, au moins un sel de l'acide éthylène acrylique, et en ce qu'elles présentent un extrait sec supérieur à 65 %, préférentiellement supérieur à 70 %, très préférentiellement supérieur à 75 %, de manière encore plus préférentielle entre 75 et 78 % de leur poids total.

Ces dispersions et / ou suspensions aqueuses sont aussi caractérisées en ce que les matières minérales et / ou les pigments ont un diamètre moyen inférieur à 50 µm, préférentiellement inférieur à 15 µm, très préférentiellement inférieur à 5 µm, et de manière encore plus préférentielle en ce que ce diamètre moyen est compris entre 0,3 et 1,7 µm, de manière encore plus préférentielle est compris entre 0,5 et 0,9 µm, tel que mesuré par un appareil Sedigraph™ 5100 commercialisé par la société MICROMERITICS™.

Ces dispersions et / ou suspensions aqueuses sont aussi caractérisées en ce qu'elles présentent une fraction de particules avec un diamètre inférieur à 2 µm supérieure à 60 % (telle que mesurée par un appareil Sedigraph™ 5100 commercialisé par la société MICROMERITICS™), ou une fraction de particules avec un diamètre inférieur à 2 µm supérieure à 90 % (telle que mesurée par un appareil Sedigraph™ 5100 commercialisé par la société MICROMERITICS™), ou une fraction de particules avec un diamètre inférieur à 2 µm supérieure à 99 % (telle que mesurée par un appareil Sedigraph™ 5100 commercialisé par la société MICROMERITICS™).

Ces dispersions et / ou suspensions aqueuses sont aussi caractérisées en ce qu'elles présentent une viscosité Brookfield™ mesurée à 100 tours / minute (à 25 °C, avec le mobile n° 3, avec l'appareil DVII+, dans un container de 1 litre) inférieure a 1 000 mPa.s, préférentiellement inférieure à 700 mPa.s, très préférentiellement inférieure à 500 mPa.s, et de manière encore plus préférentielle en ce que cette viscosité est comprise entre 100 et 300 mPa.s.

Ces dispersions et / ou suspensions aqueuses sont aussi caractérisées en ce qu'elles présentent un résidu sur tamis supérieur à 45 µm, de moins de 100 ppm, préférentiellement de moins de 70 ppm, plus préférentiellement de moins de 60 ppm, et de manière la plus préférentielle de moins de 50 ppm.

Ces dispersions et / ou suspensions aqueuses sont aussi caractérisées en ce que le sel d'acide éthylène acrylique est un sel soluble en milieu aqueux.

Ces dispersions et / ou suspensions aqueuses sont aussi caractérisées en ce que les groupement carboxyliques du sel d'acide éthylène acrylique sont partiellement ou totalement dissociés de leur proton acide.

Ces dispersions et / ou suspensions aqueuses sont aussi caractérisées en ce que dans le sel d'acide éthylène acrylique, le rapport massique de monomère éthylène à monomère d'acide acrylique est compris entre 10 : 90 et 30 : 70, et est préférentiellement égal à 20 : 80.

Ces dispersions et / ou suspensions aqueuses sont aussi caractérisées en ce que le sel d'acide éthylène acrylique présente un indice de fusion compris entre 50 g / 10 minutes et 1 500 g / 10 minutes, de préférence entre 200 g / 10 minutes et 300 g / 10 minutes lorsque le sel d'acide éthylène acrylique est totalement neutralisé, et de préférence entre 1 000 g / 10 minutes et 1 400 g / 10 minutes lorsque le sel d'acide éthylène acrylique est neutralisé de 70 à 99 % (en fraction des sites carboxyliques), mesuré selon la norme ASTM1238 125°C / 2,16 kg.

Ces dispersions et / ou suspensions aqueuses sont aussi caractérisées en ce que les groupements carboxyliques desdits sels d'acide éthylène acrylique sont entièrement neutralisés ou neutralisés de 70 % à 99 % par rapport à la totalité des sites carboxyliques de l'acide éthylène acrylique, avec au moins unagent de neutralisation.

Ces dispersions et / ou suspensions aqueuses sont aussi caractérisées en ce que ledit agent de neutralisation comprend au moins un cation monovalent.

Ces dispersions et / ou suspensions aqueuses sont aussi caractérisées en ce que ledit cation monovalent comprend un ou plusieurs ions alkali et / ou une ou plusieurs amines et / ou l'ammoniaque.

Ces dispersions et / ou suspensions aqueuses sont aussi caractérisées en ce que ledit ion monovalent alkali comprend un ion sodium.

Ces dispersions et / ou suspensions aqueuses sont aussi caractérisées en ce que ladite amine comprend une amine primaire.

Ces dispersions et / ou suspensions aqueuses sont aussi caractérisées en ce que ladite amine comprend une alcanolamines, comprenant au moins un groupement éthanol et / ou propanol, et en ce que ladite alcanolamines est alors préférentiellement choisi parmi la 2-amino-2-methyl-1-propanol et / ou la diméthyléthanolamine, et en ce qu'elle est très préférentiellement la 2-amino-2-methyl-1-propanol.

Ces dispersions et / ou suspensions aqueuses sont aussi caractérisées en ce qu'on utilise une quantité de 2-amino-2-méthyl-1-propanol, de manière à apporter une fraction de cation monovalent comprise entre 75 et 125 % des groupements carboxyliques de l'acide éthylène acrylique, et préférentiellement de manière à apporter une fraction de cation monovalent égale à 100 % des groupement carboxyliques de l'acide éthylène acrylique. Ces dispersions et / ou suspensions aqueuses sont aussi caractérisées en ce qu'on utilise une quantité de diméthyl éthanolamine, de manière à apporter une fraction de cation monovalent comprise entre 75 et 125 % des groupement carboxyliques de l'acide éthylène acrylique, et préférentiellement de manière à apporter une fraction de cation monovalent égale à 100 % des groupement carboxyliques de l'acide éthylène acrylique.

Ces dispersions et / ou suspensions aqueuses sont aussi caractérisées en ce que ledit acide éthylène acrylique présente une viscosité de 3 000 à 25 000 mPa.s, de 15 000 à 100 000 mPa.s, et de 50 000 à 400 000 mPa.s à des températures respectives de 200°C, 170°C et 140°C.

Ces dispersions et / ou suspensions aqueuses sont aussi caractérisées en ce que ledit acide éthylène acrylique présente une viscosité de 3 000 à 7 000 mPa.s, de 15 000 à 20 000 mPa.s, et de 50 000 à 100 000 mPa.s à des températures respectives de 200°C, 170°C et 140°C.

Ces dispersions et / ou suspensions aqueuses sont aussi caractérisées en ce que ledit acide éthylène acrylique présente une viscosité de 15 000 a 25 000 mPa.s, de 50 000 a 100 000 mPa.s, et de 300 000 a 400 000 mPa.s à des températures respectives de 200°C, 170°C et 140°C.

Un autre objet de l'invention réside dans les pigments secs obtenus par le procédé selon l'invention (c'est-à-dire après l'étape de séchage d)).

Ces pigments secs sont aussi caractérisés en ce qu'ils contiennent du carbonate de calcium, au moins un sel d'acide éthylène acrylique et dont les particules de carbonate de calcium présentent un diamètre moyen inférieur à 50 µm, préférentiellement inférieur à 15 µm, très préférentiellement inférieur à 5 µm, et de manière encore plus préférentielle en ce que ce diamètre moyen est compris entre 0,3 et 1,7 µm, et de manière encore plus préférentielle compris entre 0,5 et 0,9 µm (tel que mesuré par un appareil Sedigraph™ 5100 commercialisé par la société MICROMERITICS™).

Ces pigments secs sont aussi caractérisés en ce que les particules de carbonate de calcium présentent une fraction de particules avec un diamètre inférieur à 2 µm supérieure à 60 % (telle que mesurée par un appareil Sedigraph™ 5100 commercialisé par la société MICROMERITICS™), ou une fraction de particules avec un diamètre inférieur à 2 µm de supérieure à 90 % (telle que mesurée par un appareil Sedigraph™ 5100 commercialisé par la société MICROMERITICS™), ou une fraction de particules avec un diamètre inférieur à 2 µm de supérieure à 99 % (telle que mesurée par un appareil Sedigraph™ 5100 commercialisé par la société MICROMERITICS™).

Un autre objet de l'invention réside dans l'utilisation des dispersions et des suspensions aqueuses selon l'invention, ainsi que des pigments secs selon l'invention, dans les domaines du papier, du plastique et des peintures, notamment dans la masse du papier et du plastique, et dans le couchage du papier et du plastique.

### EXEMPLES

### Exemple 1

Cet exemple illustre le procédé selon l'invention, dans lequel un carbonate de calcium naturel est traité par un sel de l'acide éthylène acrylique pendant une étape de broyage en milieu aqueux, un agent dispersant étant introduit pendant ladite étape de broyage.

A ce titre, cet exemple commence par décrire les copolymères de l'acide éthylène acrylique utilisés, puis la fabrication de certains de leurs sels.

Note : toutes les caractéristiques granulométriques des suspensions de carbonate de calcium ont été mesurées à partir d'un appareil du type Sedigraph™ 5100 commercialisé par la société MICROMERITICS™.

### Copolymère de l'acide éthylène acrylique a)

Ce copolymère désigne un copolymère de l'acide éthylène acrylique composé à 20 % en poids d'acide acrylique et à 80 % en poids d'éthylène.

### Copolymère de l'acide éthylène acrylique b)

Ce copolymère désigne un copolymère de l'acide éthylène acrylique composé à 20 % en poids d'acide acrylique et à 80 % en poids d'éthylène.

Ce copolymère présente un indice de fusion de 1 300 g / 10 minutes, mesuré selon la norme ASTM 1238 125°C / 2,16 kg.

Il est bien connu qu'un indice de fusion élevé correspond à un poids moléculaire faible.

### Copolymère de l'acide éthylène acrylique c)

Ce copolymère désigne un copolymère de l'acide éthylène acrylique composé à 20 % en poids d'acide acrylique et à 80 % en poids d'éthylène.

Ce copolymère présente un indice de fusion de 300 g / 10 minutes, mesuré selon la norme ASTM 1238 125°C / 2,16 kg.

Les viscosités (mPa.s) de ces différents copolymères sont indiquées dans le tableau 1, en fonction de la température. Ces propriétés rhéologique donnent une base de comparaison des poids moléculaires de ces copolymères : une viscosité faible indique un poids moléculaire faible.

Ces valeurs de viscosité ont été mesurés aux températures indiquées ci-dessous avec un rhéomètre commercialisé sous le nom MCR 300 par la société PHYSICA™ avec les conditions suivantes : rhéomètre cône-plan CP50-1, avec un taux de cisaillement constant égal à 5 s⁻¹, dans un intervalle de température allant de 200 °C à 120°C, par pas de 0,0833 °C / s.

**Tableau 1 : viscosités des différents copolymères de l'acide éthylène acrylique en fonction de la température**

| Température (°C) | Viscosité (mPa.s) du copolymère a) | Viscosité (mPa.s) du copolymère b) | Viscosité (mPa.s) du copolymère c) |
|---|---|---|---|
| 200 | 24 300 | 5 200 | 21 700 |
| 190 | 37 300 | 7 850 | 33 400 |
| 180 | 56 300 | 11 600 | 50 100 |
| 170 | 88 300 | 17 300 | 74 500 |
| 160 | 138 000 | 25 100 | 109 000 |
| 150 | 225 000 | 43 000 | 190 000 |
| 140 | 367 000 | 72 900 | 326 000 |
| 130 | 628 000 | 127 000 | 568 000 |

### Solution de l'acide éthylène acrylique n° 1

500 grammes du copolymère a) sont ajoutés dans 2,5 litres d'eau désionisée dans un réacteur de 10 litres de type ESCO.
Sous agitation, 123,7 grammes de 2-amino-2-methyl-1-propanol (de manière à neutraliser à 100 % les sites acides carboxyliques de l'acide éthylène acrylique) ont été ajoutés et le mélange a été chauffé pendant 1 heure à 98°C.
On obtient ainsi une solution claire et limpide.

### Solution de l'acide éthylène acrylique n° 2

500 grammes du copolymère a) sont ajoutés dans 2,5 litres d'eau désionisée dans un réacteur de 10 litres de type ESCO.
Sous agitation, 130,2 grammes de di-méthyl éthanolamine (de manière à neutraliser à 100 % les sites acides carboxyliques de l'acide éthylène acrylique) ont été ajoutés et le mélange a été chauffé pendant 1 heure à 98°C.
On obtient ainsi une solution claire et limpide.

### Solution de l'acide éthylène acrylique n° 3

500 grammes du copolymère b) sont ajoutés dans 5 litres d'eau désionisée dans un réacteur de 10 litres de type ESCO.
Sous agitation, 38,8 grammes de soude (de manière à neutraliser à 75 % les sites acides carboxyliques de l'acide éthylène acrylique) ont été ajoutés et le mélange a été chauffé pendant 1 heure à 98°C.
On obtient ainsi une solution claire et limpide.

### Solution de l'acide éthylène acrylique n° 4

500 grammes du copolymère b) sont ajoutés dans 5 litres d'eau désionisée dans un réacteur de 10 litres de type ESCO.
Sous agitation, 55,4 grammes de soude (de manière à neutraliser à la totalité des sites acides carboxyliques de l'acide éthylène acrylique) ont été ajoutés et le mélange a été chauffé pendant 1 heure à 98°C.
On obtient ainsi une solution claire et limpide.

### Solution de l'acide éthylène acrylique n° 5

500 grammes du copolymère c) sont ajoutés dans 5 litres d'eau désionisée dans un réacteur de 10 litres de type ESCO.
Sous agitation, 54,1 grammes de soude (de manière à neutraliser à la totalité des sites acides carboxyliques de l'acide éthylène acrylique) ont été ajoutés et le mélange a été chauffé pendant 1 heure à 98°C.
On obtient ainsi une solution claire et limpide.

### Solution de l'acide éthylène acrylique n° 6

500 grammes du copolymère b) sont ajoutés dans 2,5 litres d'eau désionisée dans un réacteur de 10 litres de type ESCO.
Sous agitation, 200 grammes d'ammoniaque (de manière à neutraliser à 100 % les sites acides carboxyliques de l'acide éthylène acrylique) ont été ajoutés et le mélange a été chauffé pendant 1 heure à 98°C.
On obtient ainsi une solution claire et limpide.

### Essai n° 1a

Cet essai illustre l'art antérieur.
Il met en oeuvre un marbre de Norvège dont le diamètre moyen des particules est égal à 45 µm.
Ce marbre a été broyé en milieu aqueux dans un broyeur du type Dynomill™ de 1,4 litres avec 2700 grammes de billes de broyage à base de dioxyde de zirconium de diamètre compris entre 0,6 et 1 mm, et en présence de 0,65 % en poids sec d'un homopolymère de l'acide acrylique neutralisé par le sodium et le magnésium et de poids moléculaire égal à 5 400 g/mole, par rapport au poids sec de marbre.
Le broyage a nécessité 11 minutes / kg.
On obtient une suspension aqueuse de marbre dont l'extrait sec est égal à 75,5 %, et dont la taille des particules est telle que 90 % en poids d'entre elles ont un diamètre inférieur à 2 µm.
La viscosité Brookfield™ mesurée a 25 °C et a 100 tours / minute avec le mobile numéro 3 est de 251 mPa.s.
Cette viscosité est mesurée sur un appareil DVII+, dans un container de 1 litre ; cette procédure sera utilisée dans les autres essais.
Le résidu sur un tamis supérieur à 45 µm était de 40 ppm.

### Essai n° 1b

Cet essai illustre l'art antérieur.
Il met en oeuvre un marbre de Norvège dont le diamètre moyen des particules est égal à 45 µm.
Ce marbre a été broyé en milieu aqueux dans un broyeur du type Dynomill™ de 1,4 litres avec 2700 grammes de billes de broyage à base de dioxyde de zirconium de diamètre compris entre 0,6 et 1 mm, en présence de 1,0 % en poids sec de la solution de l'acide éthylène acrylique n° 6.
On obtient une suspension aqueuse de marbre dont l'extrait sec est égal à 38,0 %, et dont la taille des particules est telle que 73 % en poids d'entre elles ont un diamètre inférieur à 2 µm. Il était impossible d'augmenter l'extrait sec, sans altérer la viscosité telle qu'indiquée ci-dessous.
La viscosité Brookfield™ mesurée a 25 °C et a 100 tours / minute avec le mobile numéro 3 est comprise entre 250 et 600 mPa.s.

### Essai n° 2

Cet essai illustre l'invention.
Il met en oeuvre un marbre de Norvège dont le diamètre moyen des particules est égal à 45 µm.
Ce marbre a été broyé en milieu aqueux dans un broyeur du type Dynomill™ de 1,4 litres avec 2700 grammes de billes de broyage à base de dioxyde de zirconium de diamètre compris entre 0,6 et 1 mm, en présence de 0,67 % en poids sec d'un homopolymère de l'acide acrylique neutralisé par le sodium et le magnésium et de poids moléculaire égal à 5 400 g/mole, par rapport au poids sec de marbre, et en présence de 0,5 % en poids sec de la solution de l'acide éthylène acrylique n° 1.
On obtient une suspension aqueuse de marbre dont l'extrait sec est égal à 75,7 %, et dont la taille des particules est telle que 89 % en poids d'entre elles ont un diamètre inférieur à 2 µm.
La viscosité Brookfield mesurée a 25 °C et a 100 tours / minute avec le mobile numéro 3 est de 150 mPa.s.
Le résidu sur un tamis supérieur à 45 µm était de 13 ppm.

### Essai n° 3

Cet essai illustre l'invention.
Il met en oeuvre un marbre de Norvège dont le diamètre moyen des particules est égal à 45 µm.
Ce marbre a été broyé en milieu aqueux dans un broyeur du type Dynomill™ de 1,4 litres avec 2700 grammes de billes de broyage à base de dioxyde de zirconium de diamètre compris entre 0,6 et 1 mm, en présence de 1,04 % en poids sec d'un homopolymère de l'acide acrylique neutralisé par le sodium et le magnésium et de poids moléculaire égal à 5 400 g/mole, par rapport au poids sec de marbre, et en présence de 0,5 % en poids sec de la solution de l'acide éthylène acrylique n° 2.
Le broyage a nécessité 11,3 minutes / kg.
On obtient une suspension aqueuse de marbre dont l'extrait sec est égal à 76,1 %, et dont la taille des particules est telle que 92 % en poids d'entre elles ont un diamètre inférieur à 2 µm.
La viscosité Brookfield™ mesurée a 25 °C et a 100 tours / minute avec le mobile numéro 3 est de 160 mPa.s.

### Essai n° 4

Cet essai illustre l'invention.
Il met en oeuvre un marbre de Norvège dont le diamètre moyen des particules est égal à 45 µm.
Ce marbre a été broyé en milieu aqueux dans un broyeur du type Dynomill™ de 1,4 litres avec 2700 grammes de billes de broyage à base de dioxyde de zirconium de diamètre compris entre 0,6 et 1 mm, en présence de 1,00 % en poids sec d'un homopolymère de l'acide acrylique neutralisé par le sodium et le magnésium et de poids moléculaire égal à 5 400 g/mole, par rapport au poids sec de marbre, et en présence de 0,5 % en poids sec de la solution de l'acide éthylène acrylique n° 3.
On obtient une suspension aqueuse de marbre dont l'extrait sec est égal à 74,1 %, et dont la taille des particules est telle que 90 % en poids d'entre elles ont un diamètre inférieur à 2 µm.
La viscosité Brookfield™ mesurée a 25 °C et a 100 tours / minute avec le mobile numéro 3 est de 153 mPa.s.
Le résidu sur un tamis supérieur à 45 µm était de 59 ppm.

### Essai n° 5

Cet essai illustre l'invention.
Il met en oeuvre un marbre de Norvège dont le diamètre moyen des particules est égal à 45 µm.
Ce marbre a été broyé en milieu aqueux dans un broyeur du type Dynomill™ de 1,4 litres avec 2700 grammes de billes de broyage à base de dioxyde de zirconium de diamètre compris entre 0,6 et 1 mm, en présence de 1,00 % en poids sec d'un homopolymère de l'acide acrylique neutralisé par le sodium et le magnésium et de poids moléculaire égal à 5 400 g/mole, par rapport au poids sec de marbre, et en présence de 0,5 % en poids sec de la solution de l'acide éthylène acrylique n° 4.
On obtient une suspension aqueuse de marbre dont l'extrait sec est égal à 77,0 %, et dont la taille des particules est telle que 91 % en poids d'entre elles ont un diamètre inférieur à 2 µm.
La viscosité Brookfield™ mesurée a 25 °C et a 100 tours / minute avec le mobile numéro 3 est de 157 mPa.s.

### Essai n° 6

Cet essai illustre l'invention.
Il met en oeuvre un marbre de Norvège dont le diamètre moyen des particules est égal à 45 µm.

Ce marbre a été broyé en milieu aqueux dans un broyeur du type Dynomill™ de 1,4 litres avec 2700 grammes de billes de broyage à base de dioxyde de zirconium de diamètre compris entre 0,6 et 1 mm, en présence de 1,00 % en poids sec d'un homopolymère de l'acide acrylique neutralisé par le sodium et le magnésium et de poids moléculaire égal à 5 400 g/mole, par rapport au poids sec de marbre, et en présence de 0,5 % en poids sec de la solution de l'acide éthylène acrylique n° 5.
On obtient une suspension aqueuse de marbre dont l'extrait sec est égal à 76,9 %, et dont la taille des particules est telle que 89 % en poids d'entre elles ont un diamètre inférieur à 2 µm.

La viscosité Brookfield™ mesurée a 25 °C et a 100 tours / minute avec le mobile numéro 3 est de 187 mPa.s.

Les résultats démontrent que le procédé de l'invention conduit à des suspensions de carbonate de calcium traité avec un sel d'acide éthylène acrylique et un agent dispersant, ayant un extrait sec élevé, et notamment supérieur à 75 %.
De plus, cet extrait sec est supérieur à celui obtenu dans le cadre du procédé selon l'art antérieur, et les viscosités Brookfield™ mesurées à 25 °C et à 100 tours / minute sont inférieures à celles obtenues dans le cas de l'art antérieur.
De plus, il a été démontré que le broyage est aussi efficace avec ou sans acide éthylène acrylique, par comparaison entre les essais n° 1a et 3.
De plus, aucun exemple suivant l'invention n'a présenté un problème de création de mousse dans la suspension de carbonate de calcium.
D'autre part, on a constaté que les résidus sur tamis obtenus dans le cas de l'invention étaient tout à fait négligeables.

### Essai n° 7

Cet essai illustre l'art antérieur.
Un polyéthylène de haute densité de la société BASELL™ POLYOLEFINS commercialisé sous le nom Hostalen^{™} GM 9240 HT a été introduit dans un malaxeur à rouleaux commercialisé sous le nom Walzwerk 150x400 de la société DR. COLLIN.
A la suite, des plaques de 2 et de 4 mm d'épaisseur ont été formées dans une presse « Testing Platen Presses Type P » P300-P de la société DR. COLLIN.

### Essai n° 8

Cet essai illustre l'invention.
La suspension de l'essai n° 5 a été séchée avec un pulvérisateur MSD^{™} 100 de la société NIRO™. On obtient un marbre traité sec dont la taille des particules est telle que 88 % en poids d'entre elles ont un diamètre inférieur à 2 µm.
Le marbre traité et sec a ensuite été mélangé a 180 °C avec un polyéthylène de haute densité de la société BASELL™ POLYOLEFINS commercialisé sous le nom Hostalen^{™} GM 9240 HT dans un malaxeur à rouleaux commercialisé sous le nom Walzwerk 150x400 de la société DR. COLLIN. La composition du mélange est équimassique en produit traité et en polyéthylène haute densité.
A la suite, des plaques de 2 et de 4 mm d'épaisseur ont été formées dans une presse « Testing Platen Presses Type P » P300-P de la société DR. COLLIN.

Les résistances à la traction des plaques formées pour les essais n° 7 et 8 sont égales respectivement à 23,9 N/mm² et 24,2 N/mm² selon la norme DIN 53455.
On observe que le remplacement d'une partie du polyéthylène par le pigment selon l'invention, ne réduit pas la résistance à la traction.

## Revendications

1. Procédé de préparation d'au moins une matière minérale et / ou d'au moins un pigment comprenant du carbonate de calcium naturel et / ou précipité, préférentiellement naturel, à la fois partiellement organophile et partiellement hydrophile, et comprenant les étapes de :
a) fournir au moins une matière minérale et / ou un pigment comprenant du carbonate de calcium naturel et / ou précipité, préférentiellement naturel, sous forme sèche ou sous forme d'une dispersion et / ou d'une suspension aqueuse,
b) éventuellement broyer à sec et / ou en milieu aqueux la matière minérale et / ou le pigment résultant de l'étape a)
c) traiter la matière minérale et / ou le pigment résultant de l'étape a) et / ou de l'étape b)
d) éventuellement sécher la matière minérale et / ou le pigment résultant de l'étape a) et / ou b) et / ou c)
**caractérisé en ce que** :
- l'étape c) de traitement correspond à une étape de mélange en milieu aqueux et / ou de broyage en milieu aqueux, et / ou de concentration en milieu aqueux, de la matière minérale et / ou du pigment issu de l'étape a) et / ou de l'étape b), en présence d'au moins un sel de l'acide éthylène acrylique,
- un agent dispersant et / ou d'aide au broyage est introduit avant et / ou pendant l'étape de traitement c).

2. Procédé selon la revendication 1, **caractérisé en ce que** le sel d'acide éthylène acrylique est un sel soluble en milieu aqueux.

3. Procédé selon l'une des revendications 1 ou 2, **caractérisé en ce que** les groupements carboxyliques du sel d'acide éthylène acrylique sont partiellement ou totalement dissociés de leur proton acide.

4. Procédé selon l'une des revendications 1 à 3, **caractérisé en ce que**, dans le sel d'acide éthylène acrylique, le rapport massique de monomère éthylène à monomère d'acide acrylique est compris entre 10 : 90 et 30 : 70, et est préférentiellement égal à 20 : 80.

5. Procédé selon l'une des revendications 1 à 4, **caractérisé en ce que** le sel d'acide éthylène acrylique présente un indice de fusion compris entre 50 g / 10 minutes et 1 500 g / 10 minutes, de préférence entre 200 g / 10 minutes et 300 g / 10 minutes lorsque le sel d'acide éthylène acrylique est totalement neutralisé, et de préférence entre 1 000 g / 10 minutes et 1 400 g / 10 minutes lorsque le sel d'acide éthylène acrylique est neutralisé de 70 à 99 % (en fraction des sites carboxyliques), mesuré selon la norme ASTM1238 125°C / 2,16 kg.

6. Procédé selon l'une des revendications 1 à 5, **caractérisé en ce que** les groupements carboxyliques desdits sels d'acide éthylène acrylique sont entièrement neutralisés ou neutralisés de 70 % à 99 % par rapport à la totalité des sites carboxyliques de l'acide éthylène acrylique, avec au moins un agent de neutralisation.

7. Procédé selon la revendication 6, **caractérisé en ce que** ledit agent de neutralisation comprend au moins un cation monovalent.

8. Procédé selon la revendication 7, **caractérisé en ce que** ledit cation monovalent comprend un ou plusieurs ions alkali et / ou une ou plusieurs aminés et / ou l'ammoniaque.

9. Procédé selon la revendication 8, **caractérisé en ce que** ledit ion monovalent alkali comprend un ion sodium.

10. Procédé selon la revendication 8, **caractérisé en ce que** ladite aminé comprend une aminé primaire.

11. Procédé selon la revendication 10, **caractérisé en ce que** ladite aminé comprend une alcanolamine, comprenant au moins un groupement éthanol et / ou propanol, et **en ce que** ladite alcanolamine est alors préférentiellement choisi parmi la 2-amino-2-methyl-1-propanol et / ou la diméthyléthanolamine, et **en ce qu'**elle est très préférentiellement la 2-ammo-2-methyl- 1 -propanol.

12. Procédé selon la revendication 11, **caractérisé en ce qu'**on utilise une quantité de 2-amino-2-méthyl-1-propanol, de manière à apporter une fraction de cation monovalent comprise entre 75 et 125 % des groupements carboxyliques de l'acide éthylène acrylique, et préférentiellement de manière à apporter une fraction de cation monovalent égale à 100 % des groupement carboxyliques de l'acide éthylène acrylique.

13. Procédé selon la revendication 11, **caractérisé en ce qu'**on utilise une quantité de diméthyl éthanolamine, de manière à apporter une fraction de cation monovalent comprise entre 75 et 125 % des groupements carboxyliques de l'acide éthylène acrylique, et préférentiellement de manière à apporter une fraction de cation monovalent égale à 100 % des groupement carboxyliques de l'acide éthylène acrylique.

14. Procédé selon l'une des revendications 1 à 13, **caractérisé en ce que** ledit acide éthylène acrylique présente une viscosité de 3 000 à 25 000 mPa.s, de 15 000 à 100 000 mPa.s, et de 50 000 à 400 000 mPa.s à des températures respectives de 200°C, 170°C et 140°C.

15. Procédé selon la revendication 14, **caractérisé en ce que** ledit acide éthylène acrylique présente une viscosité de 3 000 à 7 000 mPa.s, de 15 000 à 20 000 mPa.s, et de 50 000 à 100 000 mPa.s à des températures respectives de 200°C, 170°C et 140°C.

16. Procédé selon la revendication 14, **caractérisé en ce que** ledit acide éthylène acrylique présente une viscosité de 15 000 à 25 000 mPa.s, de 50 000 à 100 000 mPa.s, et de 300 000 à 400 000 mPa.s à des températures respectives de 200°C, 170°C et 140°C.

17. Procédé selon l'une des revendications 1 à 16, **caractérisé en ce que** la matière minérale et / ou le pigment comprend, outre le carbonate de calcium, également au moins une autre matière minérale et / ou pigment choisi parmi les dolomies, les bentonites, le kaolin, le talc, le ciment, le gypse, la chaux, la magnésie, le dioxyde de titane, le blanc satin, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et **en ce que** cette autre matière minérale est préférentiellement le kaolin.

18. Procédé selon l'une des revendications 1 à 17, **caractérisé en ce que** la quantité en poids sec de carbonate de calcium est supérieure ou égale à 70 % en poids sec total de pigments et / ou de matières minérales.

19. Procédé selon l'une des revendications 1 à 18, **caractérisé en ce que**, au cours de l'étape a) et lorsque la matière minérale et / ou le pigment est présent sous forme d'une dispersion et / ou d'une suspension aqueuse, la concentration en poids sec de pigment et / ou matière minérale est supérieure à 60 %, préférentiellement 65 %, très préférentiellement supérieure à 70 %, et de manière encore plus préférentielle de 74 % à 78 % du poids total de ladite dispersion et / ou suspension ou, **en ce que** la concentration en poids sec de pigment et / ou matière minérale est inférieure à 30 %, préférentiellement comprise entre 18 et 22 % du poids total de ladite dispersion et / ou suspension, et **en ce que** ladite dispersion et / ou suspension est une suspension ne contenant pas d'agent dispersant.

20. Procédé selon l'une des revendications 1 à 19, **caractérisé en ce que** l'étape de broyage b), est réalisée en continu ou en discontinu, préférentiellement en continu.

21. Procédé selon l'une des revendications 1 à 20, **caractérisé en ce que** l'étape de broyage b), s'effectue en présence de billes de broyage à base d'oxyde et / ou de silicate de zirconium, éventuellement stabilisé avec un oxyde de cérium et / ou d'yttrium.

22. Procédé selon l'une des revendications 1 à 21, **caractérisé en ce que** l'étape de broyage b) est un broyage à sec qui conduit à l'obtention de matières minérales et / ou de pigments ayant un diamètre moyen inférieur à 50 µm, préférentiellement inférieur à 15 µm, très préférentiellement inférieur à 5 µm, et de manière encore plus préférentielle **en ce que** ce diamètre moyen est compris entre 1,3 et 1,7 µm.

23. Procédé selon l'une des revendications 1 à 21, **caractérisé en ce que** l'étape de broyage b) est un broyage en milieu aqueux qui conduit à l'obtention de matières minérales et / ou de pigments présentant une fraction de particules avec un diamètre inférieur à 2 µm supérieure à 60 % (telle que mesurée par un appareil Sedigraph™ 5100 commercialisé par la société MICROMERITICS™), ou une fraction de particules avec un diamètre inférieur à 2 µm supérieure à 90 % (telle que mesurée par un appareil Sedigraph™ 5100 commercialisé par la société MICROMERITICS™), ou une fraction de particules avec un diamètre inférieur à 2 µm supérieure à 99 % (telle que mesurée par un appareil Sedigraph™ 5100 commercialisé par la société MICROMERITICS™).

24. Procédé selon l'une des revendications 1 à 23, **caractérisé en ce que** l'étape c) de traitement est conduite en milieu aqueux, et conduit à une dispersion et / ou une suspension aqueuse dont le pourcentage en poids sec de matières minérales et / ou de pigments est supérieur à 65 %, préférentiellement supérieur à 70 %, très préférentiellement supérieur à 75 %, et de manière encore plus préférentielle entre 75 % et 78 % du poids total de ladite dispersion et / ou suspension.

25. Procédé selon l'une des revendications 1 à 24, **caractérisé en ce que** l'étape c) de traitement conduit à une dispersion et / ou une suspension aqueuse dont les matières minérales et / ou les pigments ont un diamètre moyen inférieur à 50 µm, préférentiellement inférieur à 15 µm, très préférentiellement inférieur à 5 µm, et de manière encore plus préférentielle **en ce que** ce diamètre moyen est compris entre 0,3 et 1,7 µm, et selon la manière la plus préférentielle **en ce que** ce diamètre moyen est compris entre 0,5 et 0,9 µm, tel que mesuré par un appareil Sedigraph™ 5100 commercialisé par la société MICROMERICTICS™.

26. Procédé selon l'une des revendications 1 à 25, **caractérisé en ce que** l'étape c) de traitement conduit à une dispersion et / ou une suspension aqueuse présentant une fraction de particules avec un diamètre inférieur à 2 µm supérieure à 60 % (telle que mesurée par un appareil Sedigraph™ 5100 commercialisé par la société MICROMERITICS™), ou une fraction de particules avec un diamètre inférieur à 2 µm supérieure à 90 % (telle que mesurée par un appareil Sedigraph™ 5100 commercialisé par la société MICROMERITICS™), ou une fraction de particules avec un diamètre inférieur à 2 µm supérieure à 99 % (telle que mesurée par un appareil Sedigraph™ 5100 commercialisé par la société MICROMERITICS™).

27. Procédé selon l'une des revendications 1 à 26, **caractérisé en ce que** l'étape c) de traitement conduit à une dispersion et / ou une suspension aqueuse présentant une viscosité Brookfield™ mesurée à 100 tours / minute (à 25°C avec le mobile n° 3, et avec l'appareil DVII+ dans un container de 1 litre) inférieure à 1 000 mPa.s, préférentiellement inférieure à 700 mPa.s, très préférentiellement inférieure à 500 mPa.s, et de manière encore plus préférentielle **en ce que** cette viscosité est comprise entre 100 et 300 mPa.s.

28. Procédé selon l'une des revendications 1 à 27, **caractérisé en ce que** l'étape c) de traitement conduit à une dispersion et / ou une suspension aqueuse ayant un résidu sur tamis supérieur à 45 µm, de moins de 100 ppm, de préférence moins de 70 ppm, plus préférentiellement de moins de 60 ppm, et de manière encore plus préférentielle de moins de 50 ppm.

29. Procédé selon l'une des revendications 1 à 28, **caractérisé en ce que** l'étape c) est préférentiellement une étape de broyage en milieu aqueux.

30. Procédé selon l'une des revendications 1 à 29, **caractérisé en ce que** l'étape d) de séchage est effectuée préférentiellement après l'étape c) de traitement.

31. Procédé selon l'une des revendications 1 à 30, **caractérisé en ce que** le séchage est effectué par un sécheur atomisateur.

32. Procédé selon l'une des revendications 1 à 30, **caractérisé en ce que** l'agent dispersant et / ou d'aide au broyage en milieu aqueux introduit pendant et / ou avant l'étape c) est un homopolymère de l'acide acrylique et / ou un copolymère de l'acide acrylique avec un autre monomère hydrosoluble choisi parmi l'acide méthacrylique, l'acide maléïque, l'acide itaconique, l'acide crotonique, l'acide fumarique, l'acide isocrotonique, aconitique, mésaconique, sinapique, undécylénique, angélique, canellique et/ou l'acide 2-acrylamido 2-méthyl propane sulfonique sous forme acide ou partiellement neutralisée, ou encore parmi Pacrylamide, le méthylacrylamide, les esters des acides acryliques ou méthacryliques tels que, le phosphate d'acrylate ou méthacrylate d'éthylène ou propylène glycol ou bien encore parmi la vinylpyrrolidone, le vinylcaprolactame, l'acétate de vinyle, le styrène sulfonate de sodium, Pallylarnine et ses dérivés, et préférentiellement **en ce que** l'agent dispersant et / ou d'aide au broyage est choisi parmi les copolymères de l'acide acrylique avec l'acrylamide ou l'acide maléique.

33. Procédé selon l'une des revendications 1 à 32, **caractérisé en ce que** l'agent de broyage à sec utilisé pendant l'étape b) lorsqu'il s'agit d'un broyage à sec, est choisi parmi les composés à base de glycol, et préférentiellement parmi l'éthylène glycol, le diéthylène glycol, le monopropylène glycol, et **en ce qu'**il est préférentiellement un monopropylène glycol de poids moléculaire compris entre 200 et 1 000 g/mole.

34. Procédé selon l'une des revendications 1 à 33, **caractérisé en ce que** la proportion totale d'acide éthylène acrylique est comprise entre 0,1 et 10 % préférentiellement entre 0,2 et 2 %, et est très préférentiellement entre 0,5 et 1 % du poids sec de pigments et / ou de matières minérales.

35. Procédé selon l'une des revendications 1 à 34, **caractérisé en ce que** la proportion totale de dispersant et / ou d'agent d'aide au broyage est comprise entre 0,1 et 2 % préférentiellement entre 0,2 et 1,5 %, et est très préférentiellement entre 0,3 à 0,6 % du poids sec de pigments et / ou de matières minérales.

36. Procédé selon l'une des revendications 1 à 35, **caractérisé en ce que** la quantité en poids d'acide éthylène acrylique est environ égale à la quantité en poids d'agent dispersant et / ou d'aide au broyage, lorsque l'acide éthylène acrylique est neutralisé avec le 2-amino-2-méthyl- 1 -propanol.

37. Procédé selon l'une des revendications 1 à 36, **caractérisé en ce que** la quantité en poids d'acide éthylène acrylique est environ égale à la moitié de la quantité en poids d'agent dispersant et / ou d'aide au broyage, lorsque l'acide éthylène acrylique est neutralisé avec le sodium.

38. Suspensions et / ou dispersions aqueuses de pigments et / ou de matières minérales, **caractérisées en ce qu'**elles sont obtenues par le procédé selon l'une des revendications 1 à 37.

39. Suspensions et / ou dispersions aqueuses de pigments et / ou de matières minérales selon la revendication 38, **caractérisées en ce qu'**elles comprennent du carbonate de calcium, au moins un sel de l'acide éthylène acrylique et **en ce qu'**elles présentent un extrait sec supérieur à 65 %, préférentiellement supérieur à 70 %, très préférentiellement supérieur à 75 %, et de manière encore plus préférentielle entre 75 et 78 % de leur poids total.

40. Suspensions et / ou dispersions aqueuses de pigments et / ou de matières minérales selon la revendication 39, **caractérisées en ce que** les matières minérales et / ou les pigments ont un diamètre moyen inférieur à 50 µm, préférentiellement inférieur à 15 µm, très préférentiellement inférieur à 5 µm, et de manière encore plus préférentielle **en ce que** ce diamètre moyen est compris entre 0,3 et 1,7 µm, et de manière la plus préférentielle entre 0,5 et 0,9 µm, tel que mesuré par un appareil Sedigraph™ 5100 commercialisé par la société MICROMERITICS™.

41. Suspensions et / ou dispersions aqueuses de pigments et / ou de matières minérales selon l'une des revendications 39 ou 40, **caractérisées en ce qu'**elles présentent une fraction de particules avec un diamètre inférieur à 2 µm supérieure à 60 % (telle que mesurée par un appareil Sedigraph™ 5100 commercialisé par la société MICROMERITICS™), ou une fraction de particules avec un diamètre inférieur à 2 µm supérieure à 90 % (telle que mesurée par un appareil Sedigraph™ 5100 commercialisé par la société MICROMERITICS™), ou une fraction de particules avec un diamètre inférieur à 2 µm supérieure à 99 % (telle que mesurée par un appareil Sedigraph™ 5100 commercialisé par la société MICROMERITICS™).

42. Suspensions et / ou dispersions aqueuses de pigments et / ou de matières minérales selon l'une des revendications 39 à 41, **caractérisées en ce qu'**elles présentent une viscosité Brookfield™ mesurée à 100 tours / minute (et à 25°C avec le mobile n° 3 avec l'appareil DVII+ dans un container de 1 litre) inférieure à 1 000 mPa.s, préférentiellement inférieure à 700 mPa.s, très préférentiellement inférieure à 500 mPa.s, et de manière encore plus préférentielle **en ce que** cette viscosité est comprise entre 100 et 300 mPa.s.

43. Suspensions et / ou dispersions aqueuses de pigments et / ou de matières minérales selon l'une des revendications 39 à 42, **caractérisées en ce qu'**elles présentent un résidu sur tamis supérieur à 45 µm, de moins de 100 ppm, de préférence moins de 70 ppm, plus préférentiellement de moins de 60 ppm, et de manière encore plus préférentielle de moins de 50 ppm.

44. Suspensions et / ou dispersions aqueuses de pigments et / ou de matières minérales selon l'une des revendications 39 à 43, **caractérisées en ce que** le sel d'acide éthylène acrylique est un sel soluble en milieu aqueux.

45. Suspensions et / ou dispersions aqueuses de pigments et / ou de matières minérales selon l'une des revendications 39 à 44, **caractérisées en ce que** les groupements carboxyliques du sel d'acide éthylène acrylique sont partiellement ou totalement dissociés de leur proton acide.

46. Suspensions et / ou dispersions aqueuses de pigments et / ou de matières minérales selon l'une des revendications 39 à 45, **caractérisées en ce que** dans le sel d'acide éthylène acrylique, le rapport massique de monomère éthylène à monomère d'acide acrylique est compris entre 10 : 90 et 30 : 70, et est préférentiellement égal à 20 : 80.

47. Suspensions et / ou dispersions aqueuses de pigments et / ou de matières minérales selon l'une des revendications 39 à 46, **caractérisées en ce que** le sel d'acide éthylène acrylique présente un indice de fusion compris entre 50 g / 10 minutes et 1 500 g / 10 minutes, de préférence entre 200 g / 10 minutes et 300 g / 10 minutes lorsque le sel d'acide éthylène acrylique est totalement neutralisé, et de préférence entre 1 000 g / 10 minutes et 1 400 g / 10 minutes lorsque le sel d'acide éthylène acrylique est neutralisé de 70 à 99 % (en fraction des sites carboxyliques), mesuré selon la norme ASTM1238 125°C / 2,16 kg.

48. Suspensions et / ou dispersions aqueuses de pigments et / ou de matières minérales selon l'une des revendications 39 à 47, **caractérisées en ce que** les groupements carboxyliques desdits sels d'acide éthylène acrylique sont entièrement neutralisés ou neutralisés de 70 % à 99 % par rapport à la totalité des sites carboxyliques de l'acide éthylène acrylique, avec au moins un agent de neutralisation.

49. Suspensions et / ou dispersions aqueuses de pigments et / ou de matières minérales selon la revendication 48, **caractérisées en ce que** ledit agent de neutralisation comprend au moins un cation monovalent.

50. Suspensions et / ou dispersions aqueuses de pigments et / ou de matières minérales selon la revendication 49, **caractérisées en ce que** ledit cation monovalent comprend un ou plusieurs ions alkali et / ou une ou plusieurs aminés et / ou l'ammoniaque.

51. Suspensions et / ou dispersions aqueuses de pigments et / ou de matières minérales selon la revendication 50, **caractérisées en ce que** ledit ion monovalent alkali comprend un ion sodium.

52. Suspensions et / ou dispersions aqueuses de pigments et / ou de matières minérales selon la revendication 50, **caractérisées en ce que** ladite aminé comprend une aminé primaire.

53. Suspensions et / ou dispersions aqueuses de pigments et / ou de matières minérales selon la revendication 52, **caractérisées en ce que** ladite aminé comprend une alcanolamine, comprenant au moins un groupement éthanol et / ou propanol, et **en ce que** ladite alcanolamine est alors préférentiellement choisi parmi la 2-amino-2-methyl-1-propanol et / ou la diméthyléthanolamine, et **en ce qu'**elle est très préférentiellement la 2-amino-2-methyl- 1 -propanol.

54. Suspensions et / ou dispersions aqueuses de pigments et / ou de matières minérales selon la revendication 53, **caractérisées en ce qu'**on utilise une quantité de 2-amino-2-méthyl-1 -propanol, de manière à apporter une fraction de cation monovalent comprise entre 75 et 125 % des groupements carboxyliques de l'acide éthylène acrylique, et préférentiellement de manière à apporter une fraction de cation monovalent égale à 100 % des groupement carboxyliques de l'acide éthylène acrylique.

55. Suspensions et / ou dispersions aqueuses de pigments et / ou de matières minérales selon la revendication 53, **caractérisées en ce qu'**on utilise une quantité de diméthyl éthanolamine, de manière à apporter une fraction de cation monovalent comprise entre 75 et 125 % des groupements carboxyliques de l'acide éthylène acrylique, et préférentiellement de manière à apporter une fraction de cation monovalent égale à 100 % des groupement carboxyliques de l'acide éthylène acrylique.

56. Suspensions et / ou dispersions aqueuses de pigments et / ou de matières minérales selon l'une des revendications 39 à 55, **caractérisées en ce que** ledit acide éthylène acrylique présente une viscosité de 3 000 à 25 000 mPa.s, de 15 000 à 100 000 mPa.s, et de 50 000 à 400 000 mPa.s à des températures respectives de 200°C, 170°C et 140°C.

57. Suspensions et / ou dispersions aqueuses de pigments et / ou de matières minérales selon la revendication 56, **caractérisées en ce que** ledit acide éthylène acrylique présente une viscosité de 3 000 à 7 000 mPa.s, de 15 000 à 20 000 mPa.s, et de 50 000 à 100 000 mPa.s à des températures respectives de 200°C, 170°C et 140°C.

58. Suspensions et / ou dispersions aqueuses de pigments et / ou de matières minérales selon la revendication 56, **caractérisées en ce que** ledit acide éthylène acrylique présente une viscosité de 15 000 à 25 000 mPa.s, de 50 000 à 100 000 mPa.s, et de 300 000 à 400 000 mPa.s à des températures respectives de 200°C, 170°C et 140°C.

59. Pigments secs **caractérisés en ce qu'**ils sont obtenus par le procédé selon l'une des revendications 1 à 37.

60. Pigments secs selon la revendication 59, **caractérisés en ce qu'**ils contiennent du carbonate de calcium, au moins un sel d'acide éthylène acrylique et dont les particules de carbonate de calcium présentent un diamètre moyen inférieur à 50 µm, préférentiellement inférieur à 15 µm, très préférentiellement inférieur à 5 µm, et de manière encore plus préférentielle **en ce que** ce diamètre moyen est compris entre 0,3 et 1,7 µm, et de manière la plus préférentielle est compris entre 0,5 et 0,9 µm (tel que mesuré par un appareil Sedigraph™ 5100 commercialisé par la société MICROMERITICS™).

61. Pigments secs selon la revendication 59, **caractérisés en ce que** les particules de carbonate de calcium présentent une traction de particules avec un diamètre inférieur à 2 µm supérieure à 60 % (telle que mesurée par un appareil Sedigraph™ 5100 commercialisé par la société MICROMERITICS™), ou une fraction de particules avec un diamètre inférieur à 2 µm de supérieure à 90 % (telle que mesurée par un appareil Sedigraph™ 5100 commercialisé par la société MICROMERITICS™), ou une fraction de particules avec un diamètre inférieur à 2 µm de supérieure à 99 % (telle que mesurée par un appareil Sedigraph™ 5100 commercialisé par la société MICROMERITICS™).

62. Utilisation des dispersions et des suspensions aqueuses selon l'une des revendications 38 à 58, et des pigments secs selon l'une des revendications 59 à 61, dans les domaines de la peinture, du plastique et du papier.

63. Utilisation des dispersions et des suspensions aqueuses ainsi que des pigments secs selon la revendication 62, dans le couchage et dans la masse du plastique.

64. Utilisation des dispersions et des suspensions aqueuses ainsi que des pigments secs selon la revendication 62, dans le couchage et dans la masse du papier.

## Patentansprüche

1. Verfahren zur Herstellung von wenigstens einem Mineralstoffmaterial und/oder von wenigstens einem Pigment, umfassend ein natürliches und/oder gefälltes, bevorzugt natürliches Calciumcarbonat, welches zugleich teilweise organophil und teilweise hydrophil ist, und das die Schritte umfasst:
a) Bereitstellen wenigstens eines Mineralstoffmaterials und/oder Pigments, umfassend ein natürliches und/oder gefälltes, bevorzugt natürliches Calciumcarbonat, in trockener Form oder in der Form einer wässrigen Dispersion und/oder Suspension,
b) gegebenenfalls Trockenvermahlen und/oder Vermahlen in einem wässrigen Medium des Mineralstoffmaterials und/oder des Pigments, das aus Schritt a) resultiert,
c) Behandeln des Mineralstoffmaterials und/oder des Pigments, das aus Schritt a) und/oder Schritt b) resultiert,
d) gegebenenfalls Trocknen des Mineralstoffmaterials und/oder des Pigments, das aus Schritt a) und/oder b) und/oder c) resultiert,
**dadurch gekennzeichnet, dass**:
- Behandlungsschritt c) einem Schritt entspricht, bei dem das Mineralstoffmaterial und/oder das Pigment, das aus Schritt a) und/oder aus Schritt b) erhalten wurde, in der Gegenwart von wenigstens einem Ethylenacrylsäuresalz, in einem wässrigen Medium gemischt und/oder in einem wässrigen Medium vermahlen und/oder in einem wässrigen Medium konzentriert wird,
- ein Dispergierungsmittel und/oder Mahlhilfsmittel vor und/oder während dem Behandlungsschritt c) eingebracht wird.

2. Verfahren nach Anspruch 1, **dadurch gekennzeichnet, dass** das Ethylenacrylsäuresalz ein Salz ist, das in wässrigem Medium löslich ist.

3. Verfahren nach Anspruch 1 oder 2, **dadurch gekennzeichnet, dass** die Carbonsäuregruppen des Ethylenacrylsäuresalzes teilweise oder vollständig von ihren Säureprotonen dissoziiert sind.

4. Verfahren nach einem der Ansprüche 1 bis 3, **dadurch gekennzeichnet, dass** bei dem Ethylenacrylsäuresalz das Mengenverhältnis von Ethylenmonomer zu Acrylsäuremonomer zwischen 10:90 und 30:70 liegt, und bevorzugt 20:80 beträgt.

5. Verfahren nach einem der Ansprüche 1 bis 4, **dadurch gekennzeichnet, dass** das Ethylenacrylsäuresalz einen Schmelzindex von zwischen 50 g/10 Minuten und 1 500 g/10 Minuten aufweist, bevorzugt zwischen 200 g/10 Minuten und 300 g/10 Minuten, wenn das Ethylenacrylsäuresalz vollständig neutralisiert ist, und bevorzugt zwischen 1 000 g/10 Minuten und 1 400 g/10 Minuten, wenn das Ethylenacrylsäuresalz in einem Verhältnis von 70 bis 99 % (als Anteil der Carbonsäurereste) neutralisiert ist, gemessen gemäss der Norm ASTM1238 125°C/2,16 kg.

6. Verfahren nach einem der Ansprüche 1 bis 5, **dadurch gekennzeichnet, dass** die Carbonsäuregruppen des Ethylenacrylsäuresalzes mit wenigstens einem Neutralisierungsmittel vollständig neutralisiert sind, oder in einem Verhältnis von 70 bis 99 %, bezogen auf die Gesamtzahl an Carbonsäureresten der Ethylenacrylsäure.

7. Verfahren nach Anspruch 6, **dadurch gekennzeichnet, dass** das Neutralisieningsmittel wenigstens ein monovalentes Kation umfasst.

8. Verfahren nach Anspruch 7, **dadurch gekennzeichnet, dass** das monovalente Kation ein oder mehrere Alkali-Ionen und/oder ein oder mehrere Amine und/oder Ammoniak umfasst

9. Verfahren nach Anspruch 8, **dadurch gekennzeichnet, dass** das monovalente Alkali-Ion ein Natriumion umfasst.

10. Verfahren nach Anspruch 8, **dadurch gekennzeichnet, dass** das Amin ein primäres Amin umfasst.

11. Verfahren nach Anspruch 10, **dadurch gekennzeichnet, dass** das Amin ein Alkanolamin, welches wenigstens eine Ethanol- und/oder Propanolgruppe umfasst, umfasst, und dass das Alkanolamin dann bevorzugt ausgewählt ist aus 2-Amino-2-methyl-1-propanol und/oder Dimethylethanolamin, und dass es am meisten bevorzugt 2-Amino-2-methyl-1-propanol ist.

12. Verfahren nach Anspruch 11, **dadurch gekennzeichnet, dass** eine Menge an 2-Amino-2-methyl-1-propanol verwendet wird, so dass es einen Anteil des monovalenten Kations zwischen 75 und 125 % zu den Carbonsäuregruppen der Ethylenacrylsäure beiträgt, und bevorzugt so dass es einen Anteil des monovalenten Kations von 100 % zu den Carbonsäuregruppen der Ethylenacrylsäure beiträgt.

13. Verfahren nach Anspruch 11, **dadurch gekennzeichnet, dass** eine Menge an Dimethylethanolamin verwendet wird, so dass es einen Anteil des monovalenten Kations zwischen 75 und 125 % zu den Carbonsäuregruppen der Ethylenacrylsäure beiträgt, und bevorzugt so dass es einen Anteil des monovalenten Kations von 100 % zu den Carbonsäuregruppen der Ethylenacrylsäure beiträgt.

14. Verfahren nach einem der Ansprüche 1 bis 13, **dadurch gekennzeichnet, dass** die Ethylenacrylsäure eine Viskosität von 3 000 bis 25 000 mPa.s aufweist, von 15 000 bis 100 000 mPa·s, und von 50 000 bis 400 000 mPa·s, bei einer Temperatur von 200°C, 170°C bzw. 140°C.

15. Verfahren nach Anspruch 14, **dadurch gekennzeichnet, dass** die Ethylenacrylsäure eine Viskosität von 3 000 bis 7 000 mPa.s aufweist, von 15 000 bis 20 000 mPa.s, und von 50 000 bis 100 000 mPa·s, bei einer Temperatur von 200°C, 170°C bzw. 140°C.

16. Verfahren nach Anspruch 14, **dadurch gekennzeichnet, dass** die Ethylenacrylsäure eine Viskosität von 15 000 bis 25 000 mPa·s aufweist, von 50 000 bis 100 000 mPa·s, und von 300 000 bis 400 000 mPa·s, bei einer Temperatur von 200°C, 170°C bzw. 140°C.

17. Verfahren nach einem der Ansprüche 1 bis 16, **dadurch gekennzeichnet, dass** das Mineralstoffmaterial und/oder das Pigment, zusätzlich zu dem Calciumcarbonat, ebenfalls beinhalten: wenigstens ein anderes Mineralstoffmaterial und/oder Pigment, ausgewählt aus den Dolomiten, den Bentoniten, Kaolin, Talk, Zement, Gips, Lehm, Magnesiumoxid, Titandioxid, Satinweiss, Aluminiumoxid, oder aus Aluminiumhydroxid, den Siliziumdioxiden, Glimmer, sowie einem Gemisch dieser Füllstoffe miteinander, wie Talk-Calciumcarbonat-Gemische, Calciumcarbonat-Kaolin-Gemische, oder aus Gemischen von Calciumcarbonat mit Aluminiumhydroxid oder Aluminiumoxid, oder aus Gemischen mit synthetischen oder natürlichen Fasern, oder aus Mineral-Co-Strukturen, wie Talk-Calciumcarbonat-Co-Strukturen oder Talk-Titandioxid-Co-Strukturen, oder ihren Gemischen, und **dadurch gekennzeichnet, dass** dieser andere Mineralstoff bevorzugt Kaolin ist.

18. Verfahren nach einem der Ansprüche 1 bis 17, **dadurch gekennzeichnet, dass** die Menge in Trockengewicht an Calciumcarbonat grösser oder gleich 70 % des Gesamttrockengewichts der Pigmente und/oder des Mineralstoffmaterials beträgt.

19. Verfahren nach einem der Ansprüche 1 bis 18, **dadurch gekennzeichnet, dass** während Schritt a), und wenn das Mineralstoffmaterial und/oder das Pigment in der Form einer wässrigen Dispersion und/oder Suspension vorliegt, die Trockengewichtskonzentration des Pigments und/oder des Mineralstoffmaterials grösser 60%, bevorzugt 65 %, sehr bevorzugt grösser 70 %, und noch bevorzugter zwischen 74 % und 78 % des Gesamtgewichts der Dispersion und/oder Suspension beträgt, oder dass die Trockengewichtskonzentration des Pigments und/oder des Mineralstoffmaterials kleiner 30%, bevorzugt zwischen 18 % und 22 % des Gesamtgewichts der Dispersion und/oder Suspension beträgt, und dass die Dispersion und/oder Suspension eine Suspension ist, die kein Dispergierungsmittel enthält.

20. Verfahren nach einem der Ansprüche 1 bis 19, **dadurch gekennzeichnet, dass** der Mahlschritt b) kontinuierlich oder diskontinuierlich durchgeführt wird, und bevorzugt kontinuierlich.

21. Verfahren nach einem der Ansprüche 1 bis 20, **dadurch gekennzeichnet, dass** der Mahlschritt b) in Gegenwart von Oxid basierten und/oder Zirkoniumsilikat basierten Mahlkugeln, die gegebenenfalls mit Cer- und/oder Yttriumoxid stabilisiert sind, durchgeführt wird.

22. Verfahren nach einem der Ansprüche 1 bis 21, **dadurch gekennzeichnet, dass** der Mahlschritt b) eine Trockenvermahlung ist, die zu der Herstellung von Mineralstoffmaterial und/oder Pigmenten mit einem mittleren Durchmesser von kleiner 50 µm führt, bevorzugt kleiner 15 µm, sehr bevorzugt kleiner 5 µm, und noch bevorzugter beträgt dieser mittlere Durchmesser zwischen 1,3 und 1,7 µm.

23. Verfahren nach einem der Ansprüche 1 bis 21, **dadurch gekennzeichnet, dass** der Mahlschritt b) eine Vermahlung in einem wässrigen Medium ist, die zu der Herstellung von Mineralstoffmaterial und/oder Pigmenten mit einem Anteil an Partikeln mit einem Durchmesser kleiner 2 µm von grösser 60 % führt (gemessen mit einem Sedigraph^{™} 5100, verkauft von der Firma MICROMERITICS^{™}), oder einem Anteil an Partikeln mit einem Durchmesser kleiner 2 µm von grösser 90 % (gemessen mit einem Sedigraph^{™} 5100, verkauft von der Firma MICROMERITICS^{™}), oder einem Anteil an Partikeln mit einem Durchmesser kleiner 2 µm von grösser 99 % (gemessen mit einem Sedigraph^{™} 5100, verkauft von der Firma MICROMERITICS^{™}).

24. Verfahren nach einem der Ansprüche 1 bis 23, **dadurch gekennzeichnet, dass** der Behandlungsschritt c) in einem wässrigen Medium durchgeführt wird und zu einer wässrigen Dispersion und/oder Suspension führt, deren Trockengewichtsanteil an Mineralstoffmaterial und/oder Pigmenten grösser 65 %, bevorzugt grösser 70 %, sehr bevorzugt grösser 75 %, und noch bevorzugter zwischen 75 und 78 % des Gesamtgewichts der Dispersion und/oder Suspension beträgt.

25. Verfahren nach einem der Ansprüche 1 bis 24, **dadurch gekennzeichnet, dass** der Behandlungsschritt c) zu einer wässrigen Dispersion und/oder Suspension des Mineralstoffmaterials und/oder der Pigmente führt, das bzw. die einen mittleren Durchmesser von kleiner 50 µm aufweisen, bevorzugt kleiner 15 µm, sehr bevorzugt kleiner 5 µm, und noch bevorzugter beträgt der mittlere Durchmesser zwischen 0,3 und 1,7 µm, und am meisten bevorzugt beträgt dieser mittlere Durchmesser zwischen 0,5 und 0,9 µm, gemessen mit einem Sedigraph^{™} 5100, verkauft von der Firma MICROMERITICS^{™}.

26. Verfahren nach einem der Ansprüche 1 bis 25, **dadurch gekennzeichnet, dass** der Behandlungsschritt c) zu einer wässrigen Dispersion und/oder Suspension mit einem Anteil an Partikeln mit einem Durchmesser kleiner 2 µm von grösser 60 % führt (gemessen mit einem Sedigraph^{™} 5100, verkauft von der Firma MICROMERITICS^{™}), oder einem Anteil an Partikeln mit einem Durchmesser kleiner 2 µm von grösser 90 % (gemessen mit einem Sedigraph^{™} 5100, verkauft von der Firma MICROMERITICS^{™}), oder einem Anteil an Partikeln mit einem Durchmesser kleiner 2 µm von grösser 99 % (gemessen mit einem Sedigraph^{™} 5100, verkauft von der Firma MICROMERITICS^{™}).

27. Verfahren nach einem der Ansprüche 1 bis 26, **dadurch gekennzeichnet, dass** der Behandlungsschritt c) zu einer wässrigen Dispersion und/oder Suspension mit einer Brookfield^{™} Viskosität, gemessen bei 100 U/min (bei 25°C, mit Spindel 3 und mit dem Gerät DVII+ in einem 1 Liter Behälter), von kleiner 1 000 mPa·s, bevorzugt von kleiner 700 mPa·s, sehr bevorzugt von kleiner 500 mPa·s führt, und noch bevorzugter beträgt diese Viskosität zwischen 100 und 300 mPa·s.

28. Verfahren nach einem der Ansprüche 1 bis 27, **dadurch gekennzeichnet, dass** der Behandlungsschritt c) zu einer wässrigen Dispersion und/oder Suspension mit einem Siebrückstand von grösser 45 µm von kleiner 100 ppm führt, bevorzugt von kleiner 70 ppm, bevorzugter von kleiner 60 ppm, und noch bevorzugter von kleiner 50 ppm.

29. Verfahren nach einem der Ansprüche 1 bis 2B, **dadurch gekennzeichnet, dass** Schritt c) bevorzugt ein Mahlschritt in einem wässrigen Medium ist.

30. Verfahren nach einem der Ansprüche 1 bis 29, **dadurch gekennzeichnet, dass** Trocknungsschritt d) bevorzugt nach dem Behandlungsschritt c) durchgeführt wird.

31. Verfahren nach einem der Ansprüche 1 bis 30, **dadurch gekennzeichnet, dass** die Trocknung mittels eines Zerstäubungstrockners durchgeführt wird.

32. Verfahren nach einem der Ansprüche 1 bis 30, **dadurch gekennzeichnet, dass** das Dispergierungsmittel und/oder das Mahlhilfsmittel in einem wässrigem Medium, das während oder vor Schritt c) eingebracht wird, ein Homopolymer von Acrylsäure und/oder ein Copolymer von Acrylsäure mit einem anderen wasserlöslichen Monomer ist, ausgewählt aus Methacrylsäure, Maleinsäure, Itaconsäure, Crotonsäure, Fumarsäure, Isocrotonsäure, Aconitsäure, Mesaconsäure, Sinapinsäure, Undecylensäure, Angelikasäure, Canellensäure und/oder 2-Acrylamido-2-methylpropansulfonsäure in saurer Form oder teilweise neutralisiert, oder auch aus Acrylamid, Methacrylamid, den Estern der Acryl- oder Methacrylsäuren wie Acrylatphosphat oder Ethylenmethacrylatphosphat, oder Propylenglykol, oder auch aus Vinylpyrrolidon, Vinylcaprolactam, Vinylacetat, Natriumstyrolsulfonat, Allylamin sowie seinen Derivaten, und bevorzugt ist das Dispergierungsmittel und/oder das Mahlhilfsmittel ausgewählt aus den Copolymeren von Acrylsäure mit Acrylamid oder Maleinsäure.

33. Verfahren nach einem der Ansprüche 1 bis 32, **dadurch gekennzeichnet, dass** das Trockenmahlmittel, das im Mahlschritt b) verwendet wird, wenn es das Trockenvermahlen betrifft, ausgewählt ist aus den Glykol basierten Verbindungen, und bevorzugt aus Ethylenglykol, Diethylenglykol oder Monopropylengylkol, und dass es bevorzugt ein Monopropylengylkol mit einem Molekulargewicht zwischen 200 und 1 000 g/mol ist.

34. Verfahren nach einem der Ansprüche 1 bis 33, **dadurch gekennzeichnet, dass** der Gesamtanteil an Ethylenacrylsäure zwischen 0,1 und 10 % beträgt, bevorzugt zwischen 0,2 und 2 %, und sehr bevorzugt zwischen 0,5 und 1 % des Trockengewichts der Pigmente und/oder des Mineralstoffmaterials.

35. Verfahren nach einem der Ansprüche 1 bis 34, **dadurch gekennzeichnet, dass** der Gesamtanteil an Dispergierungsmittel und/oder Mahlhilfsmittel zwischen 0,1 und 2 % beträgt, bevorzugt zwischen 0,2 und 1,5 %, und sehr bevorzugt zwischen 0,3 und 0,6 % des Trockengewichts der Pigmente und/oder des Mineralstoffmaterials.

36. Verfahren nach einem der Ansprüche 1 bis 35, **dadurch gekennzeichnet, dass** die Gewichtsmenge an Ethylenacrylsäure ungefähr gleich der Gewichtsmenge an Dispergierungsmittel und/oder Mahlhilfsmittel ist, wenn die Ethylenacrylsäure mit 2-Amino-2-methyl-1-propanol neutralisiert ist.

37. Verfahren nach einem der Ansprüche 1 bis 36, **dadurch gekennzeichnet, dass** die Gewichtsmenge an Ethylenacrylsäure ungefähr gleich der Hälfte der Gewichtsmenge an Dispergierungsmittel und/oder Mahlhilfsmittel ist, wenn die Ethylenacrylsäure mit Natrium neutralisiert ist.

38. Wässrige Suspensionen und/oder Dispersionen von Pigmenten und/oder Mineralstoffmaterial, **dadurch gekennzeichnet, dass** sie durch das Verfahren gemäss einem der Ansprüche 1 bis 37 erhalten wurden.

39. Wässrige Suspensionen und/oder Dispersionen von Pigmenten und/oder Mineralstoffmaterial nach Anspruch 38, **dadurch gekennzeichnet, dass** sie Calciumcarbonat und wenigstens ein Ethylenacrylsäuresalz enthalten, und dass sie einen Trockengehalt von grösser 65 %, bevorzugt von grösser 70 %, sehr bevorzugt von grösser 75 %, und noch bevorzugter von zwischen 75 und 78 % ihres Gesamtgewichts aufweisen.

40. Wässrige Suspensionen und/oder Dispersionen von Pigmenten und/oder Mineralstoffmaterial nach Anspruch 39, **dadurch gekennzeichnet, dass** das Mineralstoffmaterial und/oder die Pigmente einen mittleren Durchmesser von kleiner 50 µm aufweisen, bevorzugt kleiner 15 µm, sehr bevorzugt kleiner 5 µm, und noch bevorzugter beträgt der mittlere Durchmesser zwischen 0,3 und 1,7 µm, und am meisten bevorzugt beträgt dieser mittlere Durchmesser zwischen 0,5 und 0,9 µm, gemessen mit einem Sedigraph^{™} 5100, verkauft von der Firma MICROMERITICS™.

41. Wässrige Suspensionen und/oder Dispersionen von Pigmenten und/oder Mineralstoffmaterial nach einem der Ansprüche 39 oder 40, **dadurch gekennzeichnet, dass** sie einen Anteil an Partikeln mit einem Durchmesser kleiner 2 µm von grösser 60 % aufweisen (gemessen mit einem Sedigraph^{™} 5100, verkauft von der Firma MICROMERITICS^{™}), oder einen Anteil an Partikeln mit einem Durchmesser kleiner 2 µm von grösser 90 % (gemessen mit einem Sedigraph^{™} 5100, verkauft von der Firma MICROMERITICS^{™}), oder einen Anteil an Partikeln mit einem Durchmesser kleiner 2 µm von grösser 99 % (gemessen mit einem Sedigraph^{™} 5100, verkauft von der Firma MICROMERITICS^{™}).

42. Wässrige Suspensionen und/oder Dispersionen von Pigmenten und/oder Mineralstoffmaterial nach einem der Ansprüche 39 bis 41, **dadurch gekennzeichnet, dass** sie eine Brookfield^{™} Viskosität, gemessen bei 100 U/min (bei 25°C, mit Spindel 3 und mit dem Gerät DVII+ in einem 1 Liter Behälter), von kleiner 1 000 mPa·s aufweisen, bevorzugt von kleiner 700 mPa·s, sehr bevorzugt von kleiner 500 mPa·s, und noch bevorzugter beträgt diese Viskosität zwischen 100 und 300 mPa·s.

43. Wässrige Suspensionen und/oder Dispersionen von Pigmenten und/oder Mineralstoffmaterial nach einem der Ansprüche 39 bis 42, **dadurch gekennzeichnet, dass** sie einen Siebruckstand von grösser 45 µm von kleiner 100 ppm aufweisen, bevorzugt von kleiner 70 ppm, bevorzugter von kleiner 60 ppm, und noch bevorzugter von kleiner 50 ppm.

44. Wässrige Suspensionen und/oder Dispersionen von Pigmenten und/oder Mineralstoffmaterial nach einem der Ansprüche 39 bis 43, **dadurch gekennzeichnet, dass** das Ethylenacrylsäuresalz ein Salz ist, das in einem wässrigen Medium löslich ist.

45. Wässrige Suspensionen und/oder Dispersionen von Pigmenten und/oder Mineralstoffmaterial nach einem der Ansprüche 39 bis 44, **dadurch gekennzeichnet, dass** die Carbonsäuregruppen des Ethylenacrylsäuresalzes teilweise oder vollständig von ihrem Säureproton dissoziiert sind.

46. Wässrige Suspensionen und/oder Dispersionen von Pigmenten und/oder Mineralstoffmaterial nach einem der Ansprüche 39 bis 45, **dadurch gekennzeichnet, dass** bei dem Ethylenacrylsäuresalz das Massenverhältnis von Ethylenmonomer zu Acrylsäurepolymer zwischen 10:90 und 30:70 beträgt, und bevorzugt 20:80 ist.

47. Wässrige Suspensionen und/oder Dispersionen von Pigmenten und/oder Mineralstoffmaterial nach einem der Ansprüche 39 bis 46, **dadurch gekennzeichnet, dass** das Ethylenacrylsäuresalz einen Schmelzindex von zwischen 50 g/10 Minuten und 1 500 g/10 Minuten aufweist, bevorzugt zwischen 200 g/10 Minuten und 300 g/10 Minuten, wenn das Ethylenacrylsäuresalz vollständig neutralisiert ist, und bevorzugt zwischen 1 000 g/10 Minuten und 1400 g/10 Minuten, wenn das Ethylenacrylsäuresalz zu einem Anteil von 70 bis 99 % (als Anteil der Carbonsäurereste) neutralisiert ist, gemessen gemäss der Norm ASTM 1238 125°C/2,16 kg.

48. Wässrige Suspensionen und/oder Dispersionen von Pigmenten und/oder Mineralstoffmaterial nach einem der Ansprüche 39 bis 47, **dadurch gekennzeichnet, dass** die Carbonsäuregruppen der Ethylenacrylsäuresalze vollständig oder zu einem Anteil von 70 bis 99 %, bezogen auf die Gesamtzahl der Carbonsäutereste der Ethylenacrylsäure, mit wenigstens einem Neutralisationsmittel neutralisiert sind.

49. Wässrige Suspensionen und/oder Dispersionen von Pigmenten und/oder Mineralstoffmaterial nach Anspruch 48, **dadurch gekennzeichnet, dass** das Neutralisationsmittel wenigstens ein monovalentes Kation beinhaltet.

50. Wässrige Suspensionen und/oder Dispersionen von Pigmenten und/oder Mineralstoffmaterial nach Anspruch 49, **dadurch gekennzeichnet, dass** das monovalente Kation ein oder mehrere Alkali-Ionen und/oder ein oder mehrere Amine und/oder Ammoniak beinhaltet,

51. Wässrige Suspensionen und/oder Dispersionen von Pigmenten und/oder Mineralstoffmaterial nach Anspruch 50, **dadurch gekennzeichnet, dass** das monovalente Alkali-Ion wenigstens ein Natriumion beinhaltet.

52. Wässrige Suspensionen und/oder Dispersionen von Pigmenten und/oder Mineralstoffmaterial nach Anspruch 50, **dadurch gekennzeichnet, dass** das Amin ein primäres Amin beinhaltet.

53. Wässrige Suspensionen und/oder Dispersionen von Pigmenten und/oder Mineralstoffmaterial nach Anspruch 52, **dadurch gekennzeichnet, dass** das Amin ein Alkanolamin, einschliesslich wenigstens einer Ethanol- und/oder Propanolgruppe beinhaltet, und dass das Alkanolamin dann bevorzugt ausgewählt ist aus 2-Amino-2-methyl-1-propanol und/oder Dimethylethanolamin, und es ist sehr bevorzugt 2-Amino-2-methyl-1-propanol.

54. Wässrige Suspensionen und/oder Dispersionen von Pigmenten und/oder Mineralstoffmaterial nach Anspruch 53, **dadurch gekennzeichnet, dass** eine Menge an 2-Amino-2-methyl-1-propanol verwendet wird, so dass es einen Anteil des monovalenten Kations zwischen 75 und 125 % zu den Carbonsäuregruppen der Ethylenacrylsäure beiträgt, und bevorzugt so dass es einen Anteil des monovalenten Kations von 100 % zu den Carbonsäuregruppen der Ethylenacrylsäure beiträgt.

55. Wässrige Suspensionen und/oder Dispersionen von Pigmenten und/oder Mineralstoffmaterial nach Anspruch 53, **dadurch gekennzeichnet, dass** eine Menge an Ditnethylethanolamin verwendet wird, so dass es einen Anteil des monovalenten Kations zwischen 75 und 125 % zu den Carbonsäuregruppen der Ethylenacrylsäure beiträgt, und bevorzugt so dass es einen Anteil des monovalenten Kations von 100 % zu den Carbonsäuregruppen der Ethylenacrylsäure beiträgt.

56. Wässrige Suspensionen und/oder Dispersionen von Pigmenten und/oder Mineralstoffmaterial nach einem der Ansprüche 39 bis 55, **dadurch gekennzeichnet, dass** die Ethylenacrylsäure eine Viskosität von 3 000 bis 25 000 mPa·s aufweist, von 15 000 bis 100 000 mP·s, und von 50 000 bis 400 000 mPa·s, bei einer Temperatur von 200°C, 170°C bzw. 140°C.

57. Wässrige Suspensionen und/oder Dispersionen von Pigmenten und/oder Mineralstoffmaterial nach Anspruch 56, **dadurch gekennzeichnet, dass** die Ethylenacrylsäure eine Viskosität von 3 000 bis 7 000 mPa·s aufweist, von 15 000 bis 20 000 mPa·s, und von 50 000 bis 100 000 mPa·s, bei einer Temperatur von 200°C, 170°C bzw. 140°C.

58. Wässrige Suspensionen und/oder Dispersionen von Pigmenten und/oder Mineralstoffmaterial nach Anspruch 56, **dadurch gekennzeichnet, dass** die Ethylenacrylsäure eine Viskosität von 15 000 bis 25 000 mPa·s aufweist, von 50 000 bis 100 000 mPa·s, und von 300 000 bis 400 000 mPa·s, bei einer Temperatur von 200°C, 170°C bzw. 140°C.

59. Trockene Pigmente, **dadurch gekennzeichnet, dass** sie durch das Verfahren gemäss einem der Ansprüche 1 bis 37 erhalten werden.

60. Trockene Pigmente nach Anspruch 59, **dadurch gekennzeichnet, dass** sie Calciumcarbonat und wenigstens ein Ethylenacrylsäuresalz enthalten, und von dem die Calciumcarbonatpartikel einen mittleren Durchmesser von kleiner 50 µm aufweisen, bevorzugt kleiner 15 µm, sehr bevorzugt kleiner 5 µm, und noch bevorzugter beträgt der mittlere Durchmesser zwischen 0,3 und 1,7 µm, und am meisten bevorzugt beträgt dieser mittlere Durchmesser zwischen 0,5 und 0,9 pm, gemessen mit einem Sedigraph™ 5100, verkauft von der Firma MICROMERITICS™.

61. Trockene Pigmente nach Anspruch 59, **dadurch gekennzeichnet, dass** die Calciumcarbonatpartikel einen Anteil an Partikeln mit einem Durchmesser kleiner 2 µm von grösser 60 % aufweisen (gemessen mit einem Sedigraph™ 5100, verkauft von der Firma MICROMERITICS™), oder einen Anteil an Partikeln mit einem Durchmesser kleiner 2 µm von grösser 90 % (gemessen mit einem Sedigraph™ 5100, verkauft von der Firma MICROMERITICS™), oder einen Anteil an Partikeln mit einem Durchmesser kleiner 2 µm von grösser 99 % (gemessen mit einem Sedigraph™ 5100, verkauft von der Firma MICROMERITICS™).

62. Verwendung der wässrigen Dispersionen und Suspensionen gemäss einem der Ansprüche 38 bis 58, und der trockenen Pigmente gemäss einem der Ansprüche 59 bis 61 auf dem Farb-, Kunststoff- und Papiergebiet.

63. Verwendung der wässrigen Dispersionen und Suspensionen sowie den trockenen Pigmenten gemäss Anspruch 62, bei der Kunststoffbeschichtung sowie in der Kunststoffmasse.

64. Verwendung der wässrigen Dispersionen und Suspensionen sowie den trockenen Pigmenten gemäss Anspruch 62, im Papierstrich sowie in der Papiermasse.

## Claims

1. A process of preparation of at least one mineral matter and/or at least one pigment, including a natural and/or precipitated calcium carbonate, preferentially natural, made at once partially organophilic and partially hydrophilic, and including the stages of:
a) supplying at least one mineral matter and/or one pigment including natural and/or precipitated calcium carbonate, preferentially natural, in a dry form or in the form of an aqueous dispersion and/or suspension,
b) possibly dry grinding and/or grinding in an aqueous medium the mineral matter and/or the pigment resulting from stage a)
c) treating the mineral matter and/or the pigment resulting from stage a) and/or from stage b)
d) possibly drying the mineral matter and/or the pigment resulting from stage a) and/or b) and/or c)
**characterized in that**:
- treatment stage c) corresponds to a stage of blending in an aqueous medium and/or of grinding in an aqueous medium, and/or of concentration in an aqueous medium, of the mineral matter and/or the pigment obtained from stage a) and/or from stage b), in the presence of at least one salt of ethylene acrylic acid,
- a dispersing agent and/or grinding aid agent is introduced before and/or during the treatment stage c).

2. A process according to claim 1, **characterized in that** the ethylene acrylic acid salt is a salt which is soluble in aqueous media.

3. A process according to claims 1 or 2, **characterized in that** the carboxylic groupings of the ethylene acrylic acid salt are partially or totally dissociated from their acid proton.

4. A process according to one of the claims 1 to 3, **characterized in that**, in the ethylene acrylic acid salt, the mass ratio of ethylene monomer to acrylic acid monomer is between 10:90 and 30:70, and is preferentially equal to 20:80.

5. A process according to one of the claims 1 to 4, **characterized in that** the ethylene acrylic acid salt has a melt index of between 50 g/10 minutes and 1,500 g/10 minutes, preferentially between 200 g/10 minutes and 300 g/10 minutes when the ethylene acrylic acid salt is totally neutralized, and preferentially between 1,000 g/10 minutes and 1,400 g/10 minutes when the ethylene acrylic acid salt is neutralized at a rate of 70 to 99 % (as a proportion of the carboxylic sites), measured according to norm ASTM1238 125°C/2.16 kg.

6. A process according to one of the claims 1 to 5, **characterized in that** the carboxylic groupings of the said ethylene acrylic acid salts are entirely neutralized or neutralized at a rate of 70 to 99% relative to the total number of the carboxylic sites of the ethylene acrylic acid, with at least one neutralization agent.

7. A process according to claim 6, **characterized in that** the said neutralization agent includes at least one monovalent cation.

8. A process according to claim 7, **characterized in that** the said monovalent cation includes one or more alkali ions and/or one or more amines and/or ammonia.

9. A process according to claim 8, **characterized in that** the said alkali monovalent ion includes a sodium ion.

10. A process according to claim 8, **characterized in that** the said amine includes a primary amine.

11. A process according to claim 10, **characterized in that** the said amine includes an alkanolamine, including at least one ethanol and/or propanol grouping, and **in that** the said alkanolamine is then preferentially chosen from among 2-amino-2-methyl-1-propanol and/or dimethylethanolamine, and **in that** it is very preferentially 2-amino-2-methyl-1-propanol.

12. A process according to claim 11, **characterized in that** a quantity of 2-amino-2-methyl-1-propanol is used, so as to contribute a proportion of monovalent cation of between 75 and 125% of the carboxylic groupings of the ethylene acrylic acid, and preferentially so as to contribute a proportion of monovalent cation equal to 100% of the carboxylic groupings of the ethylene acrylic acid.

13. A process according to claim 11, **characterized in that** a quantity of dimethyl ethanolamine is used, so as to contribute a proportion of monovalent cation of between 75 and 125% of the carboxylic groupings of the ethylene acrylic acid, and preferentially so as to contribute a proportion of monovalent cation equal to 100% of the carboxylic groupings of the ethylene acrylic acid.

14. A process according to one of the claims 1 to 13, **characterized in that** the said ethylene acrylic acid has a viscosity of 3,000 to 25,000 mPa·s, 15,000 to 100,000 mPa·s, and 50,000 to 400,000 mPa·s at respective temperatures of 200°C, 170°C and 140°C.

15. A process according to claim 14, **characterized in that** the said ethylene acrylic acid has a viscosity of 3,000 to 7,000 mPa·s, 15,000 to 20,000 mPa·s, and 50,000 to 100,000 mPa·s at respective temperatures of 200°C, 170°C and 140°C.

16. A process according to claim 14, **characterized in that** the said ethylene acrylic acid has a viscosity of 15,000 to 25,000 mPa·s, 50,000 to 100,000 mPa·s, and 300,000 to 400,000 mPa·s at respective temperatures of 200°C, 170°C and 140°C.

17. A process according to one of the claims 1 to 16, **characterized in that** the mineral matter and/or the pigment includes, in addition to calcium carbonate, also at least one other mineral matter and/or pigment chosen from among the dolomites, the bentonites, kaolin, talc, cement, gypsum, lime, magnesia, titanium dioxide, satin white, aluminium trioxide, or again aluminium trihydroxide, the silicas, mica and a blend of these fillers one with another, such as talc-calcium carbonate blends, calcium carbonate-kaolin blends, or again blends of calcium carbonate with aluminium triiydroxide or aluminium trioxide, or again blends with synthetic or natural fibres, or again mineral costructures such as talc-calcium carbonate costructures or talc-titanium dioxide costructures, or their blends, and **in that** this other mineral matter is preferentially kaolin.

18. A process according to one of the claims 1 to 17, **characterized in that** the quantity by dry weight of calcium carbonate is greater than or equal to 70% of the total dry weight of pigments and/or of mineral matter.

19. A process according to one of the claims 1 to 18, **characterized in that**, during stage a) and when the mineral matter and/or the pigment is present in the form of an aqueous dispersion and/or suspension, die concentration by dry weight of pigment and/or mineral matter is greater than 60%, preferentially 65%, very preferentially greater than 70%, and even more preferentially between 74% and 78% of the total weight of the said dispersion and/or suspension, or **in that** the concentration by dry weight of pigment and/or mineral matter is less than 30%, preferentially between 18 and 22%, of the total weight of the said dispersion and/or suspension, and **in that** the said dispersion and/or suspension is a suspension containing no dispersing agent.

20. A process according to one of the claims 1 to 19, **characterized in that** the grinding stage b) is undertaken continuously or discontinuously, and preferentially continuously.

21. A process according to one of the claims 1 to 20, **characterized in that** the grinding stage b) is undertaken in the presence of oxide-based and/or zirconium silicate-based grinding balls, possibly stabilized with a cerium and/or yttrium oxide.

22. A process according to one of the claims 1 to 21, **characterized in that** the grinding stage b) is a dry grinding which leads to the production of mineral matter and/or pigments having an average diameter of less than 50 µm, preferentially less than 15 µm, very preferentially less than 5 µm, and even more preferentially **in that** this average diameter is between 1.3 and 1.7 µm.

23. A process according to one of the claims 1 to 21, **characterized in that** the grinding stage b) is a grinding in an aqueous medium which leads to the production of mineral matter and/or pigments having a proportion of particles with a diameter of less than 2 µm greater than 60 % (as measured by a Sedigraph™ 5100 device sold by the company MICROMERITICS™), or a proportion of particles with a diameter of less than 2 µm greater than 90 % (as measured by a Sedigraph™ 5100 device sold by the company MICROMERITICS™), or a proportion of particles with a diameter of less than 2 µm greater than 99 % (as measured by a Sedigraph™ 5100 device sold by the company MICROMERTTICS™).

24. A process according to one of the claims 1 to 23, **characterized in that** treatment stage c) is undertaken in an aqueous medium, and leads to an aqueous dispersion and/or suspension of which the percentage by dry weight of mineral matter and/or of pigments is greater than 65%, preferentially greater than 70%, very preferentially greater than 75%, and even more preferentially between 75 and 78%, of the total weight of the said dispersion and/or suspension.

25. A process according to one of the claims 1 to 24, **characterized in that** treatment stage c) leads to an aqueous dispersion and/or suspension the mineral matter and/or the pigments of which have an average diameter of less than 50 µm, preferentially less than 15 µm, very preferentially less than 5 µm, and even more preferentially **in that** the average diameter is between 0..3 and 1.7 µm, and most preferentially **in that** this average diameter is between 0.5 and 0.9 µm, as measured by a Sedigraph™ 5100 device sold by the company MICROMERITICS™.

26. A process according to one of the claims 1 to 25, **characterized in that** treatment stage c) leads to an aqueous dispersion and/or suspension having a proportion of particles with a diameter of less than 2 µm greater than 60 % (as measured by a Sedigraph™ 5100 device sold by the company MICROMERITICS™), or a proportion of particles with a diameter of less than 2 µm greater than 90 % (as measured by a Sedigraph™ 5100 device sold by the company MICROMERITICS™), or a proportion of particles with a diameter of less than 2 µm greater than 99 % (as measured by a Sedigraph™ 5100 device sold by the company MICROMERITICS™).

27. A process according to one of the claims 1 to 26, **characterized in that** treatment stage c) leads to an aqueous dispersion and/or suspension having a Brookfield™ viscosity measured at 100 revolutions/minute (at 25°C, with mobile No. 3, and with device DVII+ in a 1-litre container) of less than 1,000 mPa·s, preferentially less than 700 mPa·s, very preferentially less than 500 mPa·s, and even more preferentially **in that** this viscosity is between 100 and 300 mPa·s.

28. A process according to one of the claims 1 to 27, **characterized in that** treatment stage c) leads to an aqueous dispersion and/or suspension having a screen residue greater than 45 µm of less than 100 ppm, preferentially of less than 70 ppm, more preferentially of less than 60 ppm, and even more preferentially of less than 50 ppm.

29. A process according to one of the claims 1 to 28, **characterized in that** stage c) is preferentially a stage of grinding in an aqueous medium.

30. A process according to one of the claims 1 to 29, **characterized in that** drying stage d) is undertaken preferentially after treatment stage c).

31. A process according to one of the claims 1 to 30, **characterized in that** the drying is undertaken by a dryer-atomizer.

32. A process according to one of the claims 1 to 30, **characterized in that** the dispersing agent and/or grinding aid agent in an aqueous medium, introduced during or before stage c), is a homopolymer of acrylic acid and/or a copolymer of acrylic acid with another water-soluble monomer chosen from among methacrylic acid, maleic acid, itaconic acid, crotonic acid, fumaric acid, isocrotonic acid, aconitic acid, mesaconic acid, sinapic acid, undecylenic acid, angelic acid, canellic acid and/or 2-acrylamido 2-methyl propane sulfonic acid in acid form or partially neutralised, or again from among acrylamide, methylacrylamide, the esters of the acrylic or methacrylic acids such as acrylate phosphate or ethylene methacrylate or propylene glycol, or again from among vinylpyrrolidone, vinylcaprolactame, vinyl acetate, sodium styrene sulfonate, allylamine and its derivatives, and preferentially **in that** the dispersing agent and/or grinding aid agent is chosen from among the copolymers of acrylic acid with acrylamide or maleic acid.

33. A process according to one of the claims 1 to 32, **characterized in that** the dry grinding agent used in stage h) of grinding, when dry grinding is concerned, is chosen from among the glycol-based compounds, and preferentially from among ethylene glycol, diethylene glycol or monopropylene glycol, and **in that** it is preferentially a monopropylene glycol of molecular weight of between 200 and 1,000 g/mole.

34. A process according to one of the claims 1 to 33, **characterized in that** the total proportion of ethylene acrylic acid is between 0.1 and 10 %, preferentially between 0.2 and 2 %, and is very preferentially between 0.5 and 1 % of the dry weight of pigments and/or of mineral matter.

35. A process according to one of the claims 1 to 34, **characterized in that** the total proportion of dispersing agent and/or grinding aid agent is between 0.1 and 2 %, preferentially between 0.2 and 1.5 %, and is very preferentially between 0.3 and 0.6 % of the dry weight of pigments and/or of mineral matter.

36. A process according to one of the claims 1 to 35, **characterized in that** the quantity by weight of ethylene acrylic acid is approximately equal to the quantity by weight of dispersing agent and/or grinding aid agent, when the ethylene acrylic acid is neutralized with 2-amino-2-methyl-1-propanol.

37. A process according to one of the claims 1 to 36, **characterized in that** the quantity by weight of ethylene acrylic acid is approximately equal to half the quantity by weight of dispersing agent and/or grinding aid agent, when the ethylene acrylic acid is neutralized with sodium.

38. Aqueous suspensions and/or dispersions of pigments and/or of mineral matter **characterized in that** they are obtained by the process according to one of the claims 1 to 37.

39. Aqueous suspensions and/or dispersions of pigments and/or of mineral matter according to claim 38, **characterized in that** they include calcium carbonate, at least one salt of ethylene acrylic acid, and **in that** they have a dry extract greater than 65%, preferentially greater than 70%, very preferentially greater than 75%, and even more preferentially between 75 and 78%, of their total weight.

40. Aqueous dispersions and/or suspensions of pigments and/or of mineral matter according to claim 39, **characterized in that** the mineral matter and/or the pigments have an average diameter of less than 50 µm, preferentially less than 15 µm, very preferentially less than 5 µm, and even more preferentially **in that** the average diameter is between 0.3 and 1.7 µm, and even more preferentially is between 0.5 and 0.9 µm, as measured by a Sedigraph™ 5100 device sold by the company MICROMERITICS™.

41. Aqueous suspensions and/or dispersions of pigments and/or mineral matter according to one of the claims 39 or 40, **characterized in that** they have a proportion of particles with a diameter of less than 2 µm greater than 60 % (as measured by a Sedigraph™ 5100 device sold by the company MICROMERITICS™), or a proportion of particles with a diameter of less than 2 µm greater than 90 % (as measured by a Sedigraph™ 5100 device sold by the company MICROMERITICS™), or a proportion of particles with a diameter of less than 2 µm greater than 99 % (as measured by a Sedigraph™ 5100 device sold by the company MICROMERITICS™).

42. Aqueous suspensions and/or dispersions of pigments and/or of mineral matter according to one of the claims 39 to 41, **characterized in that** they have a Brookfield™ viscosity measured at 100 revolutions/minute (and at 25°C, with mobile No. 3, with the DVII+ device, in a 1-litre container) of less than 1,000 mPa·s, preferentially less than 700 mPa·s, very preferentially less than 500 mPa·s, and even more preferentially **in that** this viscosity is between 100 and 300 mPa·s.

43. Aqueous suspensions and/or dispersions of pigments and/or of mineral matter according to one of the claims 39 to 42, **characterized in that** they have a screen residue of over 45 µm, of less than 100 ppm, preferentially less than 70 ppm, more preferentially of less than 60 ppm, and even more preferentially of less than 50 ppm.

44. Aqueous suspensions and/or dispersions of pigments and/or of mineral matter according to one of the claims 39 to 43, **characterized in that** the salt of ethylene acrylic acid is a salt soluble in an aqueous medium.

45. Aqueous suspensions and/or dispersions of pigments and/or of mineral matter according to one of the claims 39 to 44, **characterized in that** the carboxylic groupings of the salt of ethylene acrylic acid are partially or totally dissociated from their acid proton.

46. Aqueous suspensions and/or dispersions of pigments and/or mineral matter according to one of the claims 39 to 45, **characterized in that**, in the ethylene acrylic acid salt, the mass ratio of ethylene monomer to acrylic acid monomer is between 10:90 and 30:70, and is preferentially equal to 20:80.

47. Aqueous suspensions and/or dispersions of pigments and/or of mineral matter according to one of the claims 39 to 46, **characterized in that** the ethylene acrylic acid salt has a melt index of between 50 g/10 minutes and 1,500 g/10 minutes, preferentially between 200 g/10 minutes and 300 g/10 minutes when the ethylene acrylic acid salt is totally neutralized, and preferentially between 1,000 g/10 minutes and 1,400 g/10 minutes when the ethylene acrylic acid salt is neutralized at a rate of 70 to 99 % (as a proportion of the carboxylic sites), measured according to norm ASTM1238 125°C/2.16 kg.

48. Aqueous suspensions and/or dispersions of pigments and/or of mineral matter according to one of the claims 39 to 47, **characterized in that** the carboxylic groupings of the said ethylene acrylic acid salts are entirely neutralized or neutralized at a rate of 70 to 99% relative to the total number of the carboxylic sites of the ethylene acrylic acid, with at least one neutralization agent.

49. Aqueous suspensions and/or dispersions of pigments and/or of mineral matter according to claim 48, **characterized in that** the said neutralization agent includes at least one monovalent cation,

50. Aqueous suspensions and/or dispersions of pigments and/or of mineral matter according to claim 49, **characterized in that** the said monovalent cation includes one or more alkali ions and/or one or more amines and/or ammonia.

51. Aqueous suspensions and/or dispersions of pigments and/or of mineral matter according to claim 50, **characterized in that** the said alkali monovalent ion includes at least one sodium ion.

52. Aqueous suspensions and/or dispersions of pigments and/or of mineral matter according to claim 50, **characterized in that** the said amine includes one primary amine.

53. Aqueous suspensions and/or dispersions of pigments and/or of mineral matter according to claim 52, **characterized in that** the said amine includes an alkanolamine, including at least one ethanol and/or propanol grouping, and **in that** the said alkanolamine is then preferentially chosen from among 2-amino-2-methyl-1-propanol and/or dimethylethanolamine, and **in that** it is very preferentially 2-amino-2-methyl-1-propanol.

54. Aqueous suspensions and/or dispersions of pigments and/or of mineral matter according to claim 53, **characterized in that** a quantity of 2-amino-2-methyl-1-propanol is used, so as to contribute a proportion of monovalent cation of between 75 and 125% of the carboxylic groupings of the ethylene acrylic acid, and preferentially so as to contribute a proportion of monovalent cation equal to 100% of the carboxylic groupings of the ethylene acrylic acid.

55. Aqueous suspensions and/or dispersions of pigments and/or of mineral matter according to claim 53, **characterized in that** a quantity of dimethyl ethanolamine is used, so as to contribute a proportion of monovalent cation of between 75 and 125% of the carboxylic groupings of the ethylene acrylic acid, and preferentially so as to contribute a proportion of monovalent cation equal to 100% of the carboxylic groupings of the ethylene acrylic acid.

56. Aqueous suspensions and/or dispersions of pigments and/or of mineral matter according to one of the claims 39 to 55, **characterized in that** the said ethylene acrylic acid has a viscosity of 3,000 to 25,000 mPa·s, 15,000 to 100,000 mPa·s, and 50,000 to 400,000 mPa·s at respective temperatures of 200°C, 170°C and 140°C.

57. Aqueous suspensions and/or dispersions of pigments and/or of mineral matter according to claim 56, **characterized in that** the said ethylene acrylic acid has a viscosity of 3,000 to 7,000 mPa·s, 15,000 to 20,000 mPa·s, and 50,000 to 100,000 mPa·s at respective temperatures of 200°C, 170°C and 140°C.

58. Aqueous suspensions and/or dispersions of pigments and/or of mineral matter according to according to claim 56, **characterized in that** the said ethylene acrylic acid has a viscosity of 15,000 to 25,000 mPa·s, 50,000 to 100,000 mPa·s, and 300,000 to 400,000 mPa·s at respective temperatures of 200°C, 170°C and 140°C.

59. Dry pigments **characterized in that** they are obtained by the process according to one of the claims 1 to 37.

60. Dry pigments according to claim 59, **characterized in that** they contain calcium carbonate, at least one salt of ethylene acrylic acid, of which the calcium carbonate particles have an average diameter of less than 50 µm, preferentially less than 15 µm, very preferentially less than 5 µm, and even more preferentially **in that** the average diameter is between 0,3 and 1.7 µm, and most preferentially is between 0.5 and 0.9 µm (as measured by a Sedigraph™ 5100 device sold by the company MICROMERITICS™).

61. Dry pigments according to claim 59, **characterized in that** the calcium carbonate particles have a proportion of particles with a diameter of less than 2 µm greater than 60 % (as measured by a Sedigraph™ 5100 device sold by the company MICROMERITICS™), or a proportion of particles with a diameter of less than 2 µm greater than 90 % (as measured by a Sedigraph™ 5100 device sold by the company MICROMERITICS™), or a proportion of particles with a diameter of less than 2 µm greater than 99 % (as measured by a Sedigraph™ 5100 device sold by the company MICROMERITICS™).

62. Use of the aqueous dispersions and suspensions according to one of the claims 38 to 58, and of the dry pigments according to one of the claims 59 to 61, in the fields of paint, plastic and paper.

63. Use of the aqueous dispersions and suspensions, together with dry pigments according to claim 62, in plastic coating and plastic mass.

64. Use of the aqueous dispersions and suspensions, together with dry pigments according to claim 62, in paper coating and paper mass.
